(19)

Europäisches
Patentamt
European
Patent Office
Office européen
des brevets

(11) **EP 3 001 332 A1**

(12) **EUROPEAN PATENT APPLICATION**
published in accordance with Art. 153(4) EPC

(43) Date of publication:
**30.03.2016 Bulletin 2016/13**

(51) Int Cl.:
***G06F 17/30*** *(2006.01)*

(21) Application number: **14879270.8**

(22) Date of filing: **30.12.2014**

(86) International application number:
**PCT/CN2014/095612**

(87) International publication number:
**WO 2016/015444 (04.02.2016 Gazette 2016/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **31.07.2014 CN 201410373320**

(71) Applicant: **HUAWEI TECHNOLOGIES CO., LTD.
Guangdong 518129 (CN)**

(72) Inventors:
• **DAI, Wenyuan
Shenzhen
Guangdong 518129 (CN)**

• **HE, Xiuqiang
Shenzhen
Guangdong 518129 (CN)**
• **CAO, Guoxiang
Shenzhen
Guangdong 518129 (CN)**

(74) Representative: **Maiwald Patentanwalts GmbH
Engineering
Elisenhof
Elisenstrasse 3
80335 München (DE)**

(54) **TARGET USER DETERMINATION METHOD, DEVICE AND NETWORK SERVER**

(57) The present invention discloses a method and device for determining a target user, and a network server. The method includes: for any target service, acquiring historical data of multiple behavior objects that belong to a same service type as the target service; establishing a correspondence between user identifiers of different users and behavior object identifiers of different behavior objects of the same type; based on multiple established correspondences, constructing a data model that includes a user identifier and a behavior object identifier; using a value update rule to obtain, by means of calculation, a value of a probability that a user corresponding to each user identifier becomes a target user of the target service; and further using the value of the probability to select a target user of the target service, which can not only determine a target user group in a relatively open manner, but also effectively improve accuracy of and efficiency in determining a target user, and can be widely used in an actual application aspect.

FIG. 1

**Description**

**TECHNICAL FIELD**

The present invention relates to the field of Internet information processing technologies, and in particular, to a method and device for determining a target user, and a network server.

**BACKGROUND**

With the development of Internet technologies, the Internet plays an increasingly important role in people's lives. People perform search by using a search engine, and acquire desired information from the Internet, and a network operator assesses an interest or a requirement of a user by using a search keyword input by the user and actively recommends a product associated with the search keyword to the user.

For example, for a smartphone designed exclusively for students, by matching a search keyword of a user with a search keyword of the product, a network operator can determine a user who needs the smartphone, and recommend the smartphone designed exclusively for students to the user, to help the user quickly find a desired product and implement an effective promotion of the product.

It may be learned that how to accurately determine a target user for a product becomes an important issue in an effective promotion of the product.

For a large-sized search company, a target user of a commodity is determined by matching a search keyword input by a user (or a web browsing record of the user) with a keyword of the commodity. However, the search keyword input by the user cannot be acquired by all search companies, that is, a manner of determining a target user of a commodity by matching a search keyword input by a user (or a web browsing record of the user) with a keyword of the commodity can be used only by a particular company and cannot be widely used in the field of technologies of determining a target user.

In addition, a collaborative filtering technology is proposed, that is, a user group that has a purchase behavior similar to that of a user is determined according to a historical purchase behavior of the user, and the product is recommended to the user with reference to a purchase behavior of the user group. In this manner, the historical purchase behavior of the user needs to be analyzed and matched with a purchase behavior of another user. However, provided that no user has purchased a specific product (for example, a new product), this manner cannot be used either.

**SUMMARY**

In view of this, the present invention provides a method and device for determining a target user, and a network server, to resolve how to conveniently and quickly determine a target user during a product recommendation process, thereby improving accuracy of and efficiency in determining a target user.

According to a first aspect of the present invention, a method for determining a target user is provided, where the method includes:

for any target service, acquiring user behavior data generated by multiple behavior objects that belong to a same service type as the target service, where each piece of user behavior data includes a user identifier and a behavior object identifier;

determining, according to user identifiers and behavior object identifiers that are included in the acquired user behavior data, a correspondence between user identifiers of different users and behavior object identifiers of different behavior objects of the same type, where the correspondence is used to represent an operating and operated relationship between a user corresponding to a user identifier and a behavior object corresponding to a behavior object identifier;

according to a behavior object included in the target service, assigning an initial score to each user identifier in the correspondence, and assigning an initial score to each behavior object identifier in the correspondence;

using the correspondence to construct a data model that is used for score transferring, where elements of the constructed data model include a user identifier and a behavior object identifier that are in the correspondence; and

calculating, based on the data model and the initial scores and by using a value update rule, a value of an element included in the data model to obtain a value of a probability that a user corresponding to each user identifier becomes a target user corresponding to the target service, and selecting, according to the value of the probability, a target user of the target service.

With reference to a possible implementation manner of the first aspect of the present invention, in a first possible implementation manner, the data model is a transfer matrix, and elements included in the transfer matrix include the user identifier and the behavior object identifier that are in the correspondence; and

the performing, based on the data model and the initial scores and by using a value update rule, an iterative operation on a value of an element included in the data model to obtain, by means of calculation, a value of a probability that a user corresponding to each user identifier becomes a target user corresponding to the target service includes:

> performing, according to the initial scores and the value update rule, an iterative operation on a value of a matrix element included in the transfer matrix to obtain, by means of calculation, a convergence value of each user identifier, and using the convergence value as the value of the probability that the user corresponding to each user identifier becomes the target user corresponding to the target service.

With reference to the first possible implementation manner of the first aspect of the present invention, in a second possible implementation manner, the performing, according to the initial scores and the value update rule, an iterative operation on a value of a matrix element included in the transfer matrix to obtain, by means of calculation, a convergence value of each user identifier includes:

> obtaining, by means of calculation, a convergence value in the transfer matrix element included in the transfer matrix; and
> determining a matrix element corresponding to each user identifier, and using a convergence value corresponding to a determined matrix element as a convergence value of a user identifier corresponding to the matrix element, where the convergence value is obtained by means of calculation; where
> the convergence value in the transfer matrix element included in the transfer matrix is obtained by means of calculation in the following manner:

$$R(n)_m = \alpha * T * R(n)_{m-1} + \frac{1-\alpha}{2} * \frac{1}{n} + \frac{1-\alpha}{2} * R(n)_0 ;$$

> where
> $R(n)_m$ indicates convergence values of n elements in the transfer matrix that are obtained by means of the $M^{th}$ iterative operation, $R(n)_{m-1}$ indicates convergence values of n elements in the transfer matrix that are obtained by means of the $(M1)^{th}$ iterative operation, $\alpha$ is a diminution factor, $T$ is a transfer matrix, $R(n)_0$ includes an initial score of each user identifier and an initial score of each behavior object identifier, n is a natural number and indicates that the transfer matrix includes n elements, a value of n is a sum of a quantity of user identifiers and a quantity of behavior object identifiers, where the user identifiers and the behavior object identifiers are included in the acquired user behavior data, m is a natural number and indicates a quantity of times of performing an iterative operation and a value of m is determined by whether $R(n)_m$ obtained by means of calculation is convergent.

With reference to the first possible implementation manner of the first aspect of the present invention, or with reference to the second possible implementation manner of the first aspect of the present invention, in a third possible implementation manner, a manner of determining an initial value in the transfer matrix element included in the transfer matrix includes:

> for the user identifiers included in the acquired user behavior data, determining, according to the correspondence, a quantity of behavior object identifiers that have a correspondence with one user identifier, and obtaining, according to the quantity of the behavior object identifiers, an initial value of a matrix element, where the matrix element is in the transfer matrix and determined by the user identifier, and the behavior object identifiers that have a correspondence; and
> for the behavior object identifiers included in the acquired user behavior data, determining, according to the correspondence, a quantity of user identifiers that have a correspondence with one behavior object identifier, and obtaining, according to the quantity of the user identifiers, an initial value of a matrix element, where the matrix element is in the transfer matrix and determined by the behavior object identifier, and the user identifiers that have a correspondence.

With reference to the possible implementation manner of the first aspect of the present invention, with reference to the first possible implementation manner of the first aspect of the present invention, with reference to the second possible implementation manner of the first aspect of the present invention, or with reference to the third possible implementation manner of the first aspect of the present invention, in a fourth possible implementation manner, the according to an object identifier included in the target service, assigning an initial score to each user identifier in the correspondence, and assigning an initial score to each behavior object identifier in the correspondence includes:

selecting, from the acquired user behavior data according to the behavior object included in the target service, behavior object identifiers that are the same as or similar to the behavior object included in the target service; determining that, in the correspondence, an initial score of an already-selected behavior object identifier is greater than an initial score of an unselected behavior object identifier; and determining that, in the correspondence, an initial score of a user identifier that has a correspondence with the already-selected behavior object identifier is greater than an initial score of a user identifier that has a correspondence with the unselected behavior object identifier, where in the correspondence, an initial score of a behavior object identifier the same as the behavior object identifier included in the target service is greater than an initial score of a behavior object identifier similar to the behavior object identifier included in the target service.

With reference to the possible implementation manner of the first aspect of the present invention, in a fifth possible implementation manner, after the determining a correspondence between user identifiers of different users and behavior object identifiers of different behavior objects of the same type, the method further includes:

establishing, according to the correspondence, an association diagram between a user identifier and a behavior object identifier, where the association diagram includes at least one or more of the following: a user identifier node, a behavior object identifier node, an association line between different user identifier nodes that have an association relationship, an association line between a user identifier and a behavior object identifier that have an association relationship, and an association line between different behavior object identifier nodes that have an association relationship.

With reference to the fifth possible implementation manner of the first aspect of the present invention, in a sixth possible implementation manner, a manner of determining an initial value in the transfer matrix element included in the transfer matrix includes:

determining, according to an association line between each user identifier and another user identifier and an association line between each user identifier and a behavior object identifier in the association diagram, an initial value of a matrix element, where the matrix element is in the transfer matrix and determined by the user identifier and a behavior object identifier or another user identifier that has an association relationship; and determining, according to an association line between each behavior object identifier and a user identifier in the association diagram, an initial value of a matrix element, where the matrix element is in the transfer matrix and determined by the behavior object identifier and a user identifier that has an association relationship.

With reference to the possible implementation manner of the first aspect of the present invention, with reference to the first possible implementation manner of the first aspect of the present invention, with reference to the second possible implementation manner of the first aspect of the present invention, with reference to the third possible implementation manner of the first aspect of the present invention, with reference to the fourth possible implementation manner of the first aspect of the present invention, with reference to the fifth possible implementation manner of the first aspect of the present invention, or with reference to the sixth possible implementation manner of the first aspect of the present invention, in a seventh possible implementation manner, the determining, according to user identifiers and behavior object identifiers that are included in the user behavior data, a correspondence between user identifiers of different users and behavior object identifiers of different behavior objects of the same type includes:

determining social behavior data of users that are corresponding to the user identifiers included in the acquired user behavior data; establishing, according to the user identifiers included in the acquired user behavior data and the determined social behavior data of the users, a direct association relationship or an indirect association relationship between user identifiers of different users; and using the behavior object identifiers included in the acquired user behavior data and the direct association relationship or the indirect association relationship between user identifiers of different users to determine the correspondence between user identifiers of different users and behavior object identifiers of different behavior objects of the same type.

According to a second aspect of the present invention, a network server is provided, where the network server includes:

a signal receiver, configured to acquire, for any target service by using a communications network, user behavior data generated by multiple behavior objects that belong to a same service type as the target service, where each piece of user behavior data includes a user identifier and a behavior object identifier; and

a processor, configured to: determine, according to user identifiers and behavior object identifiers that are included in the acquired user behavior data, a correspondence between user identifiers of different users and behavior object identifiers of different behavior objects of the same type, where the correspondence is used to represent an operating and operated relationship between a user corresponding to a user identifier and a behavior object corresponding to a behavior object identifier; according to a behavior object included in the target service, assign an initial score to each user identifier in the correspondence, and assign an initial score to each behavior object identifier in the correspondence; use the correspondence to construct a data model that is used for score transferring, where elements of the constructed data model include a user identifier and a behavior object identifier that are in the correspondence; and calculate, based on the data model and the initial scores and by using a value update rule, a value of an element included in the data model to obtain a value of a probability that a user corresponding to each user identifier becomes a target user corresponding to the target service, and select, according to the value of the probability, a target user of the target service.

With reference to a possible implementation manner of the second aspect of the present invention, in a first possible implementation manner, the data model is a transfer matrix, and elements in the transfer matrix included in the transfer matrix include the user identifier and the behavior object identifier that are in the correspondence; and

the processor is specifically configured to: perform, according to the initial scores and the value update rule, an iterative operation on a value of a matrix element included in the transfer matrix to obtain, by means of calculation, a convergence value of each user identifier; and use the convergence value as the value of the probability that the user corresponding to each user identifier becomes the target user corresponding to the target service.

With reference to the first possible implementation manner of the second aspect of the present invention, in a second possible implementation manner, the processor is specifically configured to: obtain, by means of calculation, a convergence value in the transfer matrix element included in the transfer matrix; and determine a matrix element corresponding to each user identifier, and use a convergence value corresponding to a determined matrix element as a convergence value of a user identifier corresponding to the matrix element, where the convergence value is obtained by means of calculation; where

the convergence value in the transfer matrix element included in the transfer matrix is obtained by means of calculation in the following manner:

$$R(n)_m = \alpha * T * R(n)_{m-1} + \frac{1-\alpha}{2} * \frac{1}{n} + \frac{1-\alpha}{2} * R(n)_0 \; ;$$

where

$R(n)_m$ indicates convergence values of n elements in the transfer matrix that are obtained by means of the Mth iterative operation, $R(n)_{m-1}$ indicates convergence values of n elements in the transfer matrix that are obtained by means of the (M-1)th iterative operation, $\alpha$ is a diminution factor, $T$ is a transfer matrix, $R(n)_0$ includes an initial score of each user identifier and an initial score of each behavior object identifier, n is a natural number and indicates that the transfer matrix includes n elements in the transfer matrix, a value of n is a sum of a quantity of user identifiers and a quantity of behavior object identifiers, where the user identifiers and the behavior object identifiers are included in the acquired user behavior data, m is a natural number and indicates a quantity of times of performing an iterative operation, and a value of m is determined by whether $R(n)_m$ obtained by means of calculation is convergent.

With reference to the first possible implementation manner of the second aspect of the present invention, or with reference to the second possible implementation manner of the second aspect of the present invention, in a third possible implementation manner, a manner of determining an initial value in the transfer matrix element included in the transfer matrix includes:

for the user identifiers included in the acquired user behavior data, determining, according to the correspondence, a quantity of behavior object identifiers that have a correspondence with one user identifier, and obtaining, according to the quantity of the behavior object identifiers, an initial value of a matrix element, where the matrix element is in the transfer matrix and determined by the user identifier, and the behavior object identifiers that have a correspondence; and

for the behavior object identifiers included in the acquired user behavior data, determining, according to the correspondence, a quantity of user identifiers that have a correspondence with one behavior object identifier, and obtaining, according to the quantity of the user identifiers, an initial value of a matrix element, where the matrix element is in the transfer matrix and determined by the behavior object identifier, and the user identifiers that have a correspondence.

With reference to the possible implementation manner of the second aspect of the present invention, with reference to the first possible implementation manner of the second aspect of the present invention, with reference to the second possible implementation manner of the second aspect of the present invention, with reference to the third possible implementation manner of the second aspect of the present invention, in a fourth possible implementation manner, the processor is specifically configured to: select, from the acquired user behavior data according to the behavior object included in the target service, behavior object identifiers that are the same as or similar to the behavior object included in the target service; determine that, in the correspondence, an initial score of an already-selected behavior object identifier is greater than an initial score of an unselected behavior object identifier; and determine that, in the correspondence, an initial score of a user identifier that has a correspondence with the already-selected behavior object identifier is greater than an initial score of a user identifier that has a correspondence with the unselected behavior object identifier, where in the correspondence, an initial score of a behavior object identifier the same as the behavior object identifier included in the target service is greater than an initial score of a behavior object identifier similar to the behavior object identifier included in the target service.

With reference to the possible implementation manner of the second aspect of the present invention, in a fifth possible implementation manner, the processor is further configured to: after the correspondence between user identifiers of different users and behavior object identifiers of different behavior objects of the same type is determined, establish, according to the correspondence, an association diagram between a user identifier and a behavior object identifier, where the association diagram includes at least one or more of the following: a user identifier node, a behavior object identifier node, an association line between different user identifier nodes that have an association relationship, an association line between a user identifier and a behavior object identifier that have an association relationship, and an association line between different behavior object identifier nodes that have an association relationship.

With reference to the fifth possible implementation manner of the second aspect of the present invention, in a sixth possible implementation manner, a manner of determining an initial value in the transfer matrix element included in the transfer matrix includes:

determining, according to an association line between each user identifier and another user identifier and an association line between each user identifier and a behavior object identifier in the association diagram, an initial value of a matrix element, where the matrix element is in the transfer matrix and determined by the user identifier and a behavior object identifier or another user identifier that has an association relationship; and
determining, according to an association line between each behavior object identifier and a user identifier in the association diagram, an initial value of a matrix element, where the matrix element is in the transfer matrix and determined by the behavior object identifier and a user identifier that has an association relationship.

With reference to the possible implementation manner of the second aspect of the present invention, with reference to the first possible implementation manner of the second aspect of the present invention, with reference to the second possible implementation manner of the second aspect of the present invention, with reference to the third possible implementation manner of the second aspect of the present invention, with reference to the fourth possible implementation manner of the second aspect of the present invention, with reference to the fifth possible implementation manner of the second aspect of the present invention, or with reference to the sixth possible implementation manner of the second aspect of the present invention, in a seventh possible implementation manner, the processor is specifically configured to: determine social behavior data of users that are corresponding to the user identifiers included in the acquired user behavior data; establish, according to the user identifiers included in the acquired user behavior data and the determined social behavior data of the users, a direct association relationship or an indirect association relationship between user identifiers of different users; and use the behavior object identifiers included in the acquired user behavior data and the direct association relationship or the indirect association relationship between user identifiers of different users to determine the correspondence between user identifiers of different users and behavior object identifiers of different behavior objects of the same type.

According to a third aspect of the present invention, a device for determining a target user is provided, where the device includes:

an acquiring module, configured to acquire, for any target service, user behavior data generated by multiple behavior objects that belong to a same service type as the target service, where each piece of user behavior data includes a user identifier and a behavior object identifier;
a determining module, configured to determine, according to user identifiers and behavior object identifiers that are included in the user behavior data acquired by the acquiring module, a correspondence between user identifiers of different users and behavior object identifiers of different behavior objects of the same type, where the correspondence is used to represent an operating and operated relationship between a user corresponding to a user identifier and a behavior object corresponding to a behavior object identifier;

a value assigning module, configured to: according to a behavior object included in the target service, assign an initial score to each user identifier in the correspondence, and assign an initial score to each behavior object identifier in the correspondence; and

a calculating module, configured to: use the correspondence determined by the determining module to construct a data model that is used for score transferring, where elements of the constructed data model include a user identifier and a behavior object identifier that are in the correspondence; and

calculate, based on the data model and the initial scores of the value assigning module and by using a value update rule, a value of an element included in the data model to obtain a value of a probability that a user corresponding to each user identifier becomes a target user corresponding to the target service, and select, according to the value of the probability, a target user of the target service.

With reference to a possible implementation manner of the third aspect of the present invention, in a first possible implementation manner, the data model is a transfer matrix, and elements in the transfer matrix included in the transfer matrix include the user identifier and the behavior object identifier that are in the correspondence; and

the calculating module is specifically configured to: perform, according to the initial scores and the value update rule, an iterative operation on a value of a matrix element included in the transfer matrix to obtain, by means of calculation, a convergence value of each user identifier; and use the convergence value as the value of the probability that the user corresponding to each user identifier becomes the target user corresponding to the target service.

With reference to the first possible implementation manner of the third aspect of the present invention, in a second possible implementation manner, the calculating module is specifically configured to: obtain, by means of calculation, a convergence value in the transfer matrix element included in the transfer matrix; and determine a matrix element corresponding to each user identifier, and use a convergence value corresponding to a determined matrix element as a convergence value of a user identifier corresponding to the matrix element, where the convergence value is obtained by means of calculation; where

the convergence value in the transfer matrix element included in the transfer matrix is obtained by means of calculation in the following manner:

$$R(n)_m = \alpha * T * R(n)_{m-1} + \frac{1-\alpha}{2} * \frac{1}{n} + \frac{1-\alpha}{2} * R(n)_0 \; ;$$

where

$R(n)_m$ indicates convergence values of n elements in the transfer matrix that are obtained by means of the $M^{th}$ iterative operation, $R(n)_{m-1}$ indicates convergence values of n elements in the transfer matrix that are obtained by means of the $(M-1)^{th}$ iterative operation, $\alpha$ is a diminution factor, $T$ is a transfer matrix, $R(n)_0$ includes an initial score of each user identifier and an initial score of each behavior object identifier, n is a natural number and indicates that the transfer matrix includes n elements in the transfer matrix, a value of n is a sum of a quantity of user identifiers and a quantity of behavior object identifiers, where the user identifiers and the behavior object identifiers are included in the acquired user behavior data, m is a natural number and indicates a quantity of times of performing an iterative operation, and a value of m is determined by whether $R(n)_m$ obtained by means of calculation is convergent.

With reference to the first possible implementation manner of the third aspect of the present invention, or with reference to the second possible implementation manner of the third aspect of the present invention, in a third possible implementation manner, a manner of determining an initial value in the transfer matrix element included in the transfer matrix includes:

for the user identifiers included in the acquired user behavior data, determining, according to the correspondence, a quantity of behavior object identifiers that have a correspondence with one user identifier, and obtaining, according to the quantity of the behavior object identifiers, an initial value of a matrix element, where the matrix element is in the transfer matrix and determined by the user identifier, and the behavior object identifiers that have a correspondence; and

for the behavior object identifiers included in the acquired user behavior data, determining, according to the correspondence, a quantity of user identifiers that have a correspondence with one behavior object identifier, and obtaining, according to the quantity of the user identifiers, an initial value of a matrix element, where the matrix element is in the transfer matrix and determined by the behavior object identifier, and the user identifiers that have a correspondence.

With reference to the possible implementation manner of the third aspect of the present invention, with reference to the first possible implementation manner of the third aspect of the present invention, with reference to the second possible implementation manner of the third aspect of the present invention, with reference to the third possible implementation manner of the third aspect of the present invention, in a fourth possible implementation manner, the value assigning module is specifically configured to: select, from the acquired user behavior data according to the behavior object included in the target service, behavior object identifiers that are the same as or similar to the behavior object included in the target service; determine that, in the correspondence, an initial score of an already-selected behavior object identifier is greater than an initial score of an unselected behavior object identifier; and determine that, in the correspondence, an initial score of a user identifier that has a correspondence with the already-selected behavior object identifier is greater than an initial score of a user identifier that has a correspondence with the unselected behavior object identifier, where in the correspondence, an initial score of a behavior object identifier the same as the behavior object identifier included in the target service is greater than an initial score of a behavior object identifier similar to the behavior object identifier included in the target service.

With reference to the possible implementation manner of the third aspect of the present invention, in a fifth possible implementation manner, the device for determining further includes:

an association diagram establishing module, configured to: after the correspondence between user identifiers of different users and behavior object identifiers of different behavior objects of the same type is determined, establish, according to the correspondence determined by the determining module, an association diagram between a user identifier and a behavior object identifier, where the association diagram includes at least one or more of the following: a user identifier node, a behavior object identifier node, an association line between different user identifier nodes that have an association relationship, an association line between a user identifier and a behavior object identifier that have an association relationship, and an association line between different behavior object identifier nodes that have an association relationship.

With reference to the fifth possible implementation manner of the third aspect of the present invention, in a sixth possible implementation manner, a manner of determining an initial value in the transfer matrix element included in the transfer matrix includes:

determining, according to an association line between each user identifier and another user identifier and an association line between each user identifier and a behavior object identifier in the association diagram, an initial value of a matrix element, where the matrix element is in the transfer matrix and determined by the user identifier and a behavior object identifier or another user identifier that has an association relationship; and
determining, according to an association line between each behavior object identifier and a user identifier in the association diagram, an initial value of a matrix element, where the matrix element is in the transfer matrix and determined by the behavior object identifier and a user identifier that has an association relationship.

With reference to the possible implementation manner of the third aspect of the present invention, with reference to the first possible implementation manner of the third aspect of the present invention, with reference to the second possible implementation manner of the third aspect of the present invention, with reference to the third possible implementation manner of the third aspect of the present invention, with reference to the fourth possible implementation manner of the third aspect of the present invention, with reference to the fifth possible implementation manner of the third aspect of the present invention, or with reference to the sixth possible implementation manner of the third aspect of the present invention, in a seventh possible implementation manner, the determining module is specifically configured to: determine social behavior data of users that are corresponding to the user identifiers included in the acquired user behavior data; establish, according to the user identifiers included in the acquired user behavior data and the determined social behavior data of the users, a direct association relationship or an indirect association relationship between user identifiers of different users; and use the behavior object identifiers included in the acquired user behavior data and the direct association relationship or the indirect association relationship between user identifiers of different users to determine the correspondence between user identifiers of different users and behavior object identifiers of different behavior objects of the same type.

Beneficial effects of the present invention are as follows:

In embodiments of the present invention, for any target service, user behavior data generated by multiple behavior objects that belong to a same service type as the target service is acquired, where each piece of user behavior data includes a user identifier and a behavior object identifier; a correspondence between user identifiers of different users and behavior object identifiers of different behavior objects of the same type is determined according to user identifiers and behavior object identifiers that are included in the acquired user behavior data, where the correspondence is used to represent an operating and operated relationship between a user corresponding to a user identifier and a behavior object corresponding to a behavior object identifier; according to an object identifier included in the target service, an initial score is assigned to each user identifier in the correspondence, and an initial score is assigned to each behavior object identifier in the correspondence; the correspondence is used to construct a data model that is used for score transferring, where elements of the constructed data model include a user identifier and a behavior object identifier that are in the correspondence; and a value of an element included in the data model is calculated, based on the data model and the initial scores and by using a value update rule to obtain a value of a probability that a user corresponding to each user identifier becomes a target user corresponding to the target service, and a target user of the target service is selected according to the value of the probability. In this way, for any target service, historical data of multiple behavior objects that belong to the same service type as the target service is acquired, the correspondence between user identifiers of different users and behavior object identifiers of different behavior objects of the same type is established; based on multiple established correspondences, the data model that includes the user identifier and the behavior object identifier is constructed; an iterative algorithm is used to obtain the value of the probability that the user corresponding to each user identifier becomes the target user of the target service; the value of the probability is further used to select the target user of the target service, which can not only determine a target user group in a relatively open manner, but also effectively improve accuracy of and efficiency in determining a target user, and can be widely used in an actual application

## BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.

FIG. 1 is a schematic flowchart of a method for determining a target user according to Embodiment 1 of the present invention;
FIG. 2 is an association diagram established between user identifiers and behavior object identifiers;
FIG. 3 is a schematic flowchart of a method for determining a target user according to Embodiment 2 of the present invention;
FIG. 4 is a schematic structural diagram of a network server according to Embodiment 4 of the present invention; and
FIG. 5 is a schematic structural diagram of a device for determining a target user according to Embodiment 5 of the present invention.

## DESCRIPTION OF EMBODIMENTS

To achieve an objective of the present invention, embodiments of the present invention provide a method and device for determining a target user, and a network server. The method includes: for any target service, acquiring user behavior data generated by multiple behavior objects that belong to a same service type as the target service, where each piece of user behavior data includes a user identifier and a behavior object identifier; determining, according to user identifiers and behavior object identifiers that are included in the acquired user behavior data, a correspondence between user identifiers of different users and behavior object identifiers of different behavior objects of the same type, where the correspondence is used to represent an operating and operated relationship between a user corresponding to a user identifier and a behavior object corresponding to a behavior object identifier; according to an object identifier included in the target service, assigning an initial score to each user identifier in the correspondence, and assigning an initial score to each behavior object identifier in the correspondence; using the correspondence to construct a data model that is used for score transferring, where elements of the constructed data model include a user identifier and a behavior object identifier that are in the correspondence; and calculating, based on the data model and the initial scores and by using a value update rule, a value of an element included in the data model to obtain a value of a probability that a user corresponding to each user identifier becomes a target user corresponding to the target service, and selecting, according to the value of the probability, a target user of the target service.

In this way, for any target service, historical data of multiple behavior objects that belong to the same service type as the target service is acquired, the correspondence between user identifiers of different users and behavior object identifiers of different behavior objects of the same type is established; based on multiple established correspondences, the data model that includes the user identifier and the behavior object identifier is constructed; an iterative algorithm is used to obtain the value of the probability that the user corresponding to each user identifier becomes the target user of the target service; the value of the probability is further used to select the target user of the target service, which can not only determine a target user group in a relatively open manner, but also effectively improve accuracy of and efficiency in determining a target user, and can be widely used in an actual application aspect.

The following further describes the embodiments of the present invention in detail with reference to the accompanying drawings for the specification. Apparently, the described embodiments are merely some but not all of the embodiments of the present invention. All other embodiments obtained by a person of ordinary skill in the art based on the embodiments of the present invention without creative efforts shall fall within the protection scope of the present invention.

**Embodiment 1**

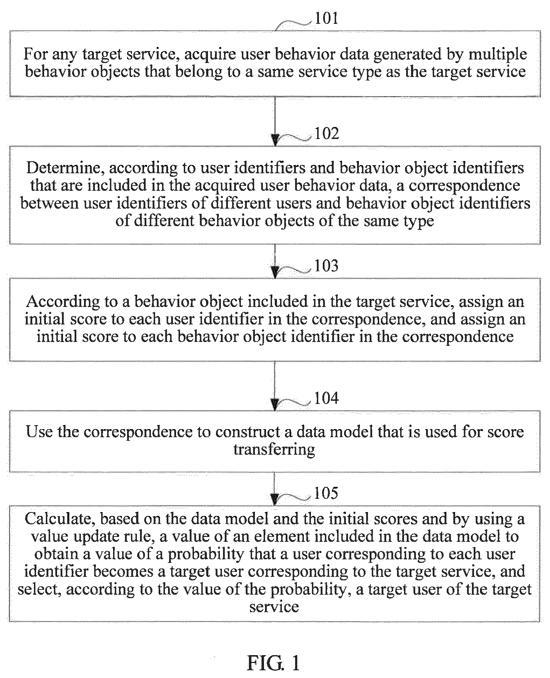

As shown in FIG. 1, FIG. 1 is a schematic flowchart of a method for determining a target user according to Embodiment 1 of the present invention. The method may be described as follows:

Step 101: For any target service, acquire user behavior data generated by multiple behavior objects that belong to a same service type as the target service.

Each piece of user behavior data includes a user identifier and a behavior object identifier.

In step 101, for any target service, before a target user of the target service needs to be determined, it is required to acquire the user behavior data (or historical data) generated by the multiple behavior objects that belong to the same service type as the target service, and based on the generated user behavior data, determine the target user for the target service.

The user behavior data refers to data of a behavior generated on the Internet or in actual life by a user for an object.

A behavior object identifier refers to an identifier of an object corresponding to a behavior operation performed by a user, for example, application software, product information, vendor information, text information, and picture information.

For example, a user downloads application software from the Internet; then, generated user behavior data is: downloading behavior data that includes a user identifier of the user and an identifier of the application software.

A user A establishes a buddy relationship with a user B by using instant messaging software; then, generated user behavior data is: social behavior data that includes an instant messaging identifier of the user A and an instant messaging identifier of the user B.

A user a purchases a product B from a vendor A; then, generated user behavior data is: purchase behavior data that includes at least two or three of the following: a user identifier of the user a, a vendor identifier of the vendor A, and a product identifier of the product B; and payment behavior data that includes the user identifier of the user a and a bank identifier.

A user b in an area M calls a user c; then, generated user behavior data is: communication behavior data that includes at least two or three of the following: a user identifier of the user b, an area identifier of the area M, and a user identifier of the user c; and the like.

In addition to the user behavior data, there is also data that is associated with a user, that is, social behavior data. The social behavior data refers to behavior data that includes a social relationship of a user, for example, a buddy relationship established between different users on an instant messaging platform; a classmate relationship between different users (for example, a classmate relationship established on a platform of renren.com.

In other words, in the current big data era, behavior data of people can be recorded. By analyzing recorded behavior data, an association relationship between user identifiers and/or an association relationship between a user identifier and a behavior object identifier may be established, which provides a basis for determining a target user subsequently.

It should be noted that a behavior object may include text information, picture information, or video information, or information for application software or information for client software, vendor information or product information, or the like.

A manner of acquiring user behavior data may be periodically reading, from a specified network server, user behavior data recorded in a period of time, or reading user behavior data in real time from a specified network server, which is not limited herein.

When a user performs an operation on a behavior object on the Internet, a server side records user behavior data generated by the user on the Internet in real time, for example:

For a downloading behavior, the server side establishes a correspondence between a user identifier and an identifier of a downloaded application.

For a purchase behavior, the server side establishes a correspondence between a user identifier, a network identifier, and an identifier of a purchased product.

For a payment behavior, the server side establishes a correspondence between a user identifier, an identifier of a consumption product, and an identifier of an area to which an account belongs.

When a target service is being determined, a behavior object that belongs to a same service type as a service type of the target service is determined according to the service type of the target service, and user behavior data associated with the determined behavior object is acquired from a network database.

For example, a target service is a promotion of a 4G-based Internet surfing service. It may be determined that the target service belongs to a data service type, and a behavior object that belongs to a same service type as a type of the target service includes a tariff package, an Internet surfing package, and the like, which means that information about tariff packages and Internet surfing packages that are used by different users need to be acquired, to find, from the different users, a user who is likely to use the 4G-based Internet surfing service.

Step 102: Determine, according to user identifiers and behavior object identifiers that are included in the acquired user behavior data, a correspondence between user identifiers of different users and behavior object identifiers of different behavior objects of the same type.

The correspondence is used to represent an operating and operated relationship between a user corresponding to a user identifier and a behavior object corresponding to a behavior object identifier.

In step 102, a user identifier and a behavior object identifier in each piece of user behavior data are analyzed according to multiple acquired pieces of user behavior data, one behavior object identifier is selected from the behavior object identifiers, and a correspondence between user identifiers of different users and the selected behavior object identifier is determined.

For example, a behavior object identifier of application software A is determined, and from obtained user behavior data, user identifiers that are corresponding to users who perform an operation on the application software a are determined. In this case, a correspondence between the user identifiers of the users who perform the operation and the behavior object identifier of the application software a is established.

For another example, the obtained user behavior data belongs to user behavior data of downloading application software (for example, the obtained user behavior data includes four user identifiers and three behavior object identifiers, the user identifiers are U1 to U4, respectively, and the behavior object identifiers are A1 to A3, respectively). In this case, the obtained user behavior data is analyzed. For a behavior object identifier, an identifier of a user who downloads application software corresponding to the behavior object identifier is determined, and a correspondence between the object identifier and the identifier of the user who downloads the application software corresponding to the behavior object identifier is established. For a user identifier, a behavior object identifier corresponding to application software downloaded by the user identifier is determined, and a correspondence between the user identifier and the object identifier of the downloaded application software is established, as shown in table 1.

Table 1

| User Identifier | Behavior Object Identifier |
|:---:|:---:|
| U1 | A1 |
| U1 | A3 |
| U2 | A2 |
| U3 | A2 |
| U4 | A3 |

It can be seen from Table 1 that, U1 downloads A1 and A3, respectively; U2 downloads A2, U3 downloads A2, and U4 downloads A3.

In another embodiment of the present invention, a manner of determining the correspondence between user identifiers of different users and behavior object identifiers of different behavior objects of the same type includes but is not limited to the following manner:

First, social behavior data of users that are corresponding to the user identifiers included in the acquired user behavior data is determined.

Due to an association relationship established between users, when a user uses a service, the used service can be recommended to another user by using an association relationship between the user and the another user, that is, by using the association relationship established between users, a potential target user can be determined for a promotion of the service.

Second, a direct association relationship or an indirect association relationship between user identifiers of different users is established according to the user identifiers included in the acquired user behavior data and the determined social behavior data of the users.

Specifically, when the user behavior data is acquired, a direct association relationship or an indirect association relationship between different user identifiers included in the user behavior data is determined with reference to social behavior data of users that are corresponding to the user identifiers included in the user behavior data.

A direct association relationship refers to social behavior data directly established between users corresponding to two different user identifiers, for example, a user A and a user B are buddies; or a quantity of times of communication between a user A and a user B exceeds a set threshold.

An indirect association relationship refers to direct social behavior data established between users corresponding to two different user identifiers and a same third-party user, for example, a user A and a user C are buddies, and a user B and the user C are buddies; then, an indirect association relationship exists between the user A and the user B.

Finally, the behavior object identifiers included in the acquired user behavior data and the direct association relationship or the indirect association relationship between user identifiers of different users are used to determine the correspondence between user identifiers of different users and behavior object identifiers of different behavior objects of the same type.

That the obtained user behavior data belongs to user behavior data of downloading application software (for example, the obtained user behavior data includes four user identifiers and three behavior object identifiers, the user identifiers are U1 to U4, respectively, and the behavior object identifiers are A1 to A3, respectively) is still used as an example for description.

While the user behavior data is acquired, social behavior data of U1 to U4 is also acquired, and it is determined that a direct association relationship exists between U1 and U2, a direct association relationship exists between U2 and U4, and a direct association relationship exists between U1 and U3. It may be seen that, an indirect association relationship exists between U1 and U4, an indirect association relationship exists between U2 and U3, an indirect association relationship exists between U3 and U4, and an indirect association relationship exists between U3 and U1.

It is determined from this that a correspondence between user identifiers of different users and behavior object identifiers is shown in Table 2.

**Table 2**

| Social Behavior Data | User Identifier | Behavior Object Identifier |
| --- | --- | --- |
| Direct association with U2 or U3, and indirect association with U4 | U1 | A1 |
| | U1 | A3 |
| Direct association with U1 or U4, and indirect association with U3 | U2 | A2 |
| Direct association with U1, and indirect association with U1 or U4 | U3 | A2 |
| Directly associated with U2, and indirectly associated with U1 or U3 | U4 | A3 |

In another embodiment of the present invention, a manner of determining the correspondence between user identifiers of different users and behavior object identifiers of different behavior objects of the same type includes but is not limited to the following manner:

First, attribute data of behavior objects corresponding to the behavior object identifiers included in the acquired user behavior data is determined.

The attribute data of behavior objects is used to indicate whether behavior objects belong to a same developer or have a same or similar function, for example, a behavior object corresponding to a behavior object identifier 1 and a behavior object corresponding to a behavior object identifier 2 belong to different series of a same behavior object, or the behavior object corresponding to the behavior object identifier 1 and the behavior object corresponding to the behavior object identifier 2 implement a same function but do not belong to a same developer.

Second, an association relationship between different behavior object identifiers is determined according to the behavior object identifiers included in the acquired user behavior data and the attribute data of behavior objects.

Different behavior object identifiers that have a same behavior object attribute have an association relationship.

Finally, the determined association relationship between different behavior object identifiers and the behavior object identifiers included in the user behavior data are used to determine the correspondence between user identifiers of different users and behavior object identifiers.

That the obtained user behavior data belongs to user behavior data of downloading application software (for example, the obtained user behavior data includes four user identifiers and three behavior object identifiers, the user identifiers are U1 to U4, respectively, and the behavior object identifiers are A1 to A3, respectively) is still used as an example for description.

While the user behavior data is acquired, attribute data of behavior objects of A1 to A3 is also acquired, and it is determined that an association relationship exists between A1 and A2.

It is determined from this that a correspondence between user identifiers of different users and behavior object identifiers is shown in Table 3.

**Table 3**

| User Identifier | Behavior Object Identifier | Attribute Data of a Behavior Object |
|---|---|---|
| U1 | A1 | Associated with A2 |
| U1 | A3 | |
| U2 | A2 | Associated with A1 |
| U3 | A2 | Associated with A1 |
| U4 | A3 | |

It should be noted that, the foregoing two manners of determining the correspondence between user identifiers of different users and behavior object identifiers may also be combined for use, which is not limited herein.

In another embodiment of the present invention, after the correspondence between user identifiers of different users and behavior object identifiers of different behavior objects of the same type is determined, the method further includes:

establishing, according to the correspondence, an association diagram between a user identifier and a behavior object identifier, where the association diagram includes at least one or more of the following: a user identifier node, a behavior object identifier node, an association line between different user identifier nodes that have an association relationship, an association line between a user identifier and a behavior object identifier that have an association relationship, and an association line between different behavior object identifier nodes that have an association relationship.

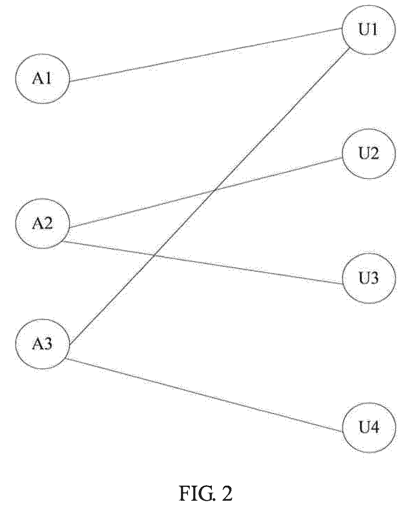

Content of Table 1 is still used as an example, and an association diagram established between user identifiers and behavior object identifiers is shown in FIG. 2.

Step 103: According to a behavior object included in the target service, assign an initial score to each user identifier in the correspondence, and assign an initial score to each behavior object identifier in the correspondence.

In step 103, behavior object identifiers that are the same as or similar to the behavior object included in the target service is selected from the acquired user behavior data according to the behavior object included in the target service; it is determined that, in the correspondence, an initial score of an already-selected behavior object identifier is greater than an initial score of an unselected behavior object identifier; and it is determined that, in the correspondence, an initial score of a user identifier that has a correspondence with the already-selected behavior object identifier is greater than an initial score of a user identifier that has a correspondence with the unselected behavior object identifier.

In the correspondence, an initial score of a behavior object identifier the same as the behavior object identifier included in the target service is greater than an initial score of a behavior object identifier similar to the behavior object identifier included in the target service.

It should be noted that, for the user identifiers and the behavior object identifiers that are included in the acquired user behavior data, an initial score may be selectively assigned to some of the user identifiers (or the behavior object identifiers), default initial scores of the other user identifiers or behavior object identifiers to which no initial score is assigned are 0, which is not limited herein.

Specifically, rule 1: For behavior objects of different types, value ranges of assigned initial scores are different.

Rule 2: An initial score of each user identifier in the acquired user behavior data and an initial score of each behavior object identifier in the acquired user behavior data are determined according to similarity between behavior objects corresponding to the behavior object identifiers included in the acquired user behavior data and the behavior object included in the target service.

Similarity of behavior objects refers to similarity of behavior object attributes, for example, functions of behavior objects are similar, or functions of behavior objects are the same.

It should be noted that, an initial value may be determined according to similarity between a behavior object corresponding to a behavior object identifier and a behavior object that needs to be promoted, where higher similarity indicates a greater initial value.

Evaluating the similarity between the behavior object corresponding to the behavior object identifier and the behavior object that needs to be promoted may be determined by means of a similarity algorithm, or may be determined according to a survey or an experiment, which is not limited herein.

It should be noted that, for each user identifier and each behavior object identifier in a correspondence, an assigned initial score may be 0.

Step 104: Use the correspondence to construct a data model that is used for score transferring.

Elements of the constructed data model include a user identifier and a behavior object identifier that are in the correspondence.

In step 104, the correspondence is used to construct a data model that is used for score transferring. The data model herein may be a data model in a form of a matrix, or may be a data model in a form of a function, provided that the data model is a data model that is related to a user identifier and a behavior object identifier and on which an iterative operation can be performed, which is not limited herein.

The following uses the data model as a matrix for detailed description.

The data model is a transfer matrix, and elements in the transfer matrix included in the transfer matrix include the user identifier and the behavior object identifier that are in the correspondence.

That is, the transfer matrix that includes the user identifier and the behavior object identifier is constructed.

A correspondence of user identifiers and behavior object identifiers of the downloaded application software that is shown in table 1 is still used as an example. A sequence of elements in the transfer matrix of the established transfer matrix is: A1, A2, A3, U1, U2, U3, and U4. That is, a 7*7 transfer matrix is obtained.

Specifically, a manner of determining an initial value in the transfer matrix element included in the transfer matrix includes:

for the user identifiers included in the acquired user behavior data, determining, according to the correspondence, a quantity of behavior object identifiers that have a correspondence with one user identifier, and obtaining, according to the quantity of the behavior object identifiers, an initial value of a matrix element, where the matrix element is in the transfer matrix and determined by the user identifier, and the behavior object identifiers that have a correspondence; and

for the behavior object identifiers included in the acquired user behavior data, determining, according to the correspondence, a quantity of user identifiers that have a correspondence with one behavior object identifier, and obtaining, according to the quantity of the user identifiers, an initial value of a matrix element, where the matrix element is in the transfer matrix and determined by the behavior object identifier, and the user identifiers that have a correspondence.

In this case, an initial state of the obtained transfer matrix is as follows:

$$
T = \begin{bmatrix}
0 & 0 & 0 & 1 & 0 & 0 & 0 \\
0 & 0 & 0 & 0 & \tfrac{1}{2} & \tfrac{1}{2} & 0 \\
0 & 0 & 0 & \tfrac{1}{2} & 0 & 0 & \tfrac{1}{2} \\
\tfrac{1}{2} & 0 & \tfrac{1}{2} & 0 & 0 & 0 & 0 \\
0 & 1 & 0 & 0 & 0 & 0 & 0 \\
0 & 1 & 0 & 0 & 0 & 0 & 0 \\
0 & 0 & 1 & 0 & 0 & 0 & 0
\end{bmatrix}
$$

It is assumed that, in step 102, after the correspondence between user identifiers of different users and behavior object identifiers of different behavior objects of the same type is determined, an association diagram between a user identifier and a behavior object identifier is further established, and a manner of determining an initial value in the transfer matrix element included in the transfer matrix may further include:

determining, according to an association line between each user identifier and another user identifier and an association line between each user identifier and a behavior object identifier in the association diagram, an initial value of a matrix element, where the matrix element is in the transfer matrix and determined by the user identifier and a behavior object identifier or another user identifier that has an association relationship; and

determining, according to an association line between each behavior object identifier and a user identifier in the association diagram, an initial value of a matrix element, where the matrix element is in the transfer matrix and determined by the behavior object identifier and a user identifier that has an association relationship.

Step 105: Calculate, based on the data model and the initial scores and by using a value update rule, a value of an element included in the data model to obtain a value of a probability that a user corresponding to each user identifier becomes a target user corresponding to the target service, and select, according to the value of the probability, a target user of the target service.

It should be noted that the value update rule refers to a rule in which an iterative algorithm is used to change, by means of calculation, values of elements in the transfer matrix. A method of a random walk may be used. However, the method of a random walk includes but is not limited to a Lattice random walk, a Gaussian random walk, and another variant form of a random walk, which is not limited herein.

Specifically, a convergence value in the transfer matrix element included in the transfer matrix is obtained by means of calculation; and a matrix element corresponding to each user identifier is determined, and a convergence value corresponding to a determined matrix element is used as a convergence value of a user identifier corresponding to the matrix element, where the convergence value is obtained by means of calculation.

Specifically, the convergence value in the transfer matrix element included in the transfer matrix is obtained by means of calculation in the following manner:

$$R(n)_m = \alpha * T * R(n)_{m-1} + \frac{1-\alpha}{2} * \frac{1}{n} + \frac{1-\alpha}{2} * R(n)_0 ;$$

where

$R(n)_m$ indicates convergence values of n elements in the transfer matrix that are obtained by means of the $M^{th}$ iterative operation, $R(n)_{m-1}$ indicates convergence values of n elements in the transfer matrix that are obtained by means of the $(M-1)^{th}$ iterative operation, $\alpha$ is a diminution factor, $T$ is a transfer matrix, $R(n)_0$ includes an initial score of each user identifier and an initial score of each behavior object identifier, n is a natural number and indicates that the transfer matrix includes n elements in the transfer matrix, a value of n is a sum of a quantity of user identifiers and a quantity of behavior object identifiers, where the user identifiers and the behavior object identifiers are included in the acquired user behavior data, m is a natural number and indicates a quantity of times of performing an iterative operation, and a value of m is determined by whether $R(n)_m$ obtained by means of calculation is convergent.

Herein, a manner of determining whether $R(n)_m$ of each user identifier is convergent includes but is not limited to: comparing a difference between $R(n)_m$ and $R(n)_{m-1}$ that are obtained by means of calculation at two consecutive times. If the difference is less than a set threshold, it indicates that $R(n)_m$ of each user identifier that is obtained by means of calculation is convergent, or if the difference is not less than the set threshold, it indicates that $R(n)_m$ of each user identifier that is obtained by means of calculation is not convergent.

After a convergence value of each user identifier is obtained, user identifiers are sequenced according to sizes of convergence values, and users corresponding to several user identifiers whose convergence values are relatively greater are selected as target users.

Alternatively, after a convergence value of each user identifier is obtained, users corresponding to user identifiers whose convergence values are greater than a set threshold value are selected as target users.

It should be noted that, in addition to the correspondence established between user identifiers and behavior object identifiers that is provided in this embodiment of the present application, a correspondence between user identifiers may further be established, and a quantity of groups of correspondences to be established may be determined according to a quantity of objects to which the acquired user behavior data relates and an association relationship between the objects, which is not specifically limited herein.

The objects include at least one or more of the following: a user identifier and a behavior object identifier.

According to the solutions of Embodiment 1 of the present invention, for any target service, user behavior data generated by multiple behavior objects that belong to a same service type as the target service is acquired, where each piece of user behavior data includes a user identifier and a behavior object identifier; a correspondence between user identifiers of different users and behavior object identifiers of different behavior objects of the same type is determined according to user identifiers and behavior object identifiers that are included in the acquired user behavior data, where the correspondence is used to represent an operating and operated relationship between a user corresponding to a user identifier and a behavior object corresponding to a behavior object identifier; according to an object identifier included in the target service, an initial score is assigned to each user identifier in the correspondence, and an initial score is assigned to each behavior object identifier in the correspondence; the correspondence is used to construct a data model that is used for score transferring, where elements of the constructed data model include a user identifier and a behavior object identifier that are in the correspondence; and a value of an element included in the data model is calculated, based on the data model and the initial scores and by using a value update rule to obtain a value of a probability that a user corresponding to each user identifier becomes a target user corresponding to the target service, and a target user of the target service is selected according to the value of the probability. In this way, for any target service, historical data of multiple behavior objects that belong to the same service type as the target service is acquired, the correspondence between user identifiers of different users and behavior object identifiers of different behavior objects of the same type is established; based on multiple established correspondences, the data model that includes the user identifier and the behavior object identifier is constructed; an iterative algorithm is used to obtain the value of the probability that the user corresponding to each user identifier becomes the target user of the target service; the value of the probability is further used to select the target user of the target service, which can not only determine a target user group in a relatively open manner, but also effectively improve accuracy of and efficiency in determining a target user, and can be widely used in an actual application aspect.

**Embodiment 2**

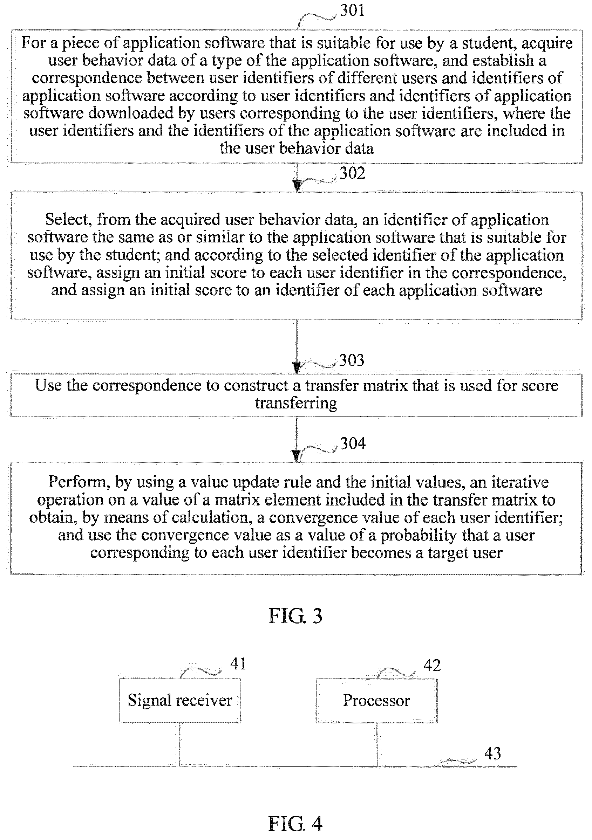

As shown in FIG. 3, FIG. 3 is a schematic flowchart of a method for determining a target user according to Embodiment 2 of the present invention. Determining a target user for an application market is used as an example for description in Embodiment 2 of the present invention. The method provided in this embodiment may be applied in the field of online service data, for example, fields such as an e-commerce website, a credit card service of a bank, and commodity recommendation.

It should be noted that, the field of the application market usually records user behavior data of behaviors such as browsing an address and downloading an application by a user, for example, user behavior data of downloading application software of a learning category by a student user and downloading travel-related application software (including, for example, information about a scenic spot, flight information, and hotel information) by a travel user.

Step 301: For a piece of application software that is suitable for use by a student, acquire user behavior data of a type of the application software, and establish a correspondence between user identifiers of different users and identifiers of application software according to user identifiers and identifiers of application software downloaded by users corresponding to the user identifiers, where the user identifiers and the identifiers of the application software are included in the user behavior data.

An implementation manner of step 301 is the same as implementation manners of steps 101 to 102 in Embodiment 1 of the present invention, and is not specifically limited herein.

Step 302: Select, from the acquired user behavior data, an identifier of application software the same as or similar to the application software that is suitable for use by the student; and according to the selected identifier of the application software, assign an initial score to each user identifier in the correspondence, and assign an initial score to an identifier of each application software.

In step 302, for example, an initial score that is assigned to an identifier of a piece of application software the same as the application software that is suitable for use by the student is 1, an initial score that is assigned to an identifier of another piece of application software is 0, and an initial score that is assigned to user identifiers in the user behavior data is 0.

Step 303: Use the correspondence to construct a transfer matrix that is used for score transferring.

Elements in the transfer matrix included in the transfer matrix includes a user identifier and an identifier of application software that are in the correspondence.

In step 303, for the user identifiers included in the acquired user behavior data, a quantity of identifiers of application software that have a correspondence with one user identifier is determined according to the correspondence, and an initial value of a matrix element is obtained according to the quantity of the identifiers of application software, where the matrix element is in the transfer matrix and determined by the user identifier, and the identifiers of application software that have a correspondence. For example, assuming that the quantity is 2, the initial value in the transfer matrix element is 1/2, where the matrix element is in the transfer matrix and determined by the user identifier, and the identifiers of application software that have a correspondence.

For the identifiers of application software that are included in the acquired user behavior data, a quantity of user identifiers that have a correspondence with one identifier of application software is determined according to the correspondence, and an initial value of a matrix element is obtained according to the quantity of the user identifiers, where the matrix element is in the transfer matrix and determined by the identifier of application software, and the user identifiers that have a correspondence. For example, assuming that the quantity is 4, the obtained initial value in the transfer matrix element is 1/4, where the matrix element is in the transfer matrix and determined by the identifier of application software, and the user identifiers that have a correspondence.

It should be noted that, according to the established correspondence, an initial value of a matrix element determined by a user identifier or an identifier of application software for which no correspondence is established may be set to 0, which is not limited herein.

Specifically, the constructed transfer matrix that includes user identifiers and identifiers of application software may be expressed as follows:

$$T(u, a)= \begin{cases} 0, \text{ if a correspondence between u and a is not established} \\ 1\!\!\!\diagup_{\overline{\omega}(u)}, \text{ if a correspondence between u and a is established} \end{cases};$$

where

$\overline{\omega}(u)$ is a quantity of established correspondences between u and a, u indicates the user identifier, and a indicates the identifier of application software.

Assuming that in step 301, user identifiers included in the acquired user behavior data are U1 to U4, and identifiers of application software that are included in the acquired user behavior data are A1 to A3, the determined correspondences between the user identifiers and the identifiers of application software are:

a correspondence between U1, and A1 and A2, a correspondence between U2, and A1, A2, and A3, a correspondence between U3, and A2 and A3, a correspondence between U4, and A2 and A3, a correspondence between A1, and U1 and U2, a correspondence between A2, and U1, U2, U3, and U4, and a correspondence between A1, and U2, U3, and U4.

In this case, the obtained transfer matrix is as follows:

$$T = \begin{pmatrix} 0 & 0 & 0 & \dfrac{1}{2} & \dfrac{1}{2} & 0 & 0 \\ 0 & 0 & 0 & \dfrac{1}{4} & \dfrac{1}{4} & \dfrac{1}{4} & \dfrac{1}{4} \\ 0 & 0 & 0 & 0 & \dfrac{1}{3} & \dfrac{1}{3} & \dfrac{1}{3} \\ \dfrac{1}{2} & \dfrac{1}{2} & 0 & 0 & 0 & 0 & 0 \\ \dfrac{1}{3} & \dfrac{1}{3} & \dfrac{1}{3} & 0 & 0 & 0 & 0 \\ 0 & \dfrac{1}{2} & \dfrac{1}{2} & 0 & 0 & 0 & 0 \\ 0 & \dfrac{1}{2} & \dfrac{1}{2} & 0 & 0 & 0 & 0 \end{pmatrix}$$

It should be noted that, a sequence of identifiers of application software and user identifiers that are corresponding to row elements and column elements in the matrix is: A1, A2, A3, U1, U2, U3, and U4.
Step 304: Perform, by using a value update rule and the initial values, an iterative operation on a value of a matrix element included in the transfer matrix, to obtain, by means of calculation, a convergence value of each user identifier, and use the convergence value as a value of a probability that a user corresponding to each user identifier becomes as a target user.
In step 304, a convergence value in the transfer matrix element included in the transfer matrix is obtained by means of calculation, and a matrix element corresponding to each user identifier is determined, and a convergence value corresponding to a determined matrix element is used as a convergence value of a user identifier corresponding to the matrix element, where the convergence value is obtained by means of calculation.
Specifically, the convergence value in the transfer matrix element included in the transfer matrix is obtained by means of calculation:

$$R(n)_m = \alpha * T * R(n)_{m-1} + \frac{1-\alpha}{2} * \frac{1}{n} + \frac{1-\alpha}{2} * R(n)_0 \; ;$$

where

$R(n)_m$ indicates convergence values of n elements in the transfer matrix that are obtained by means of the $M^{th}$ iterative operation, $R(n)_{m-1}$ indicates convergence values of n elements in the transfer matrix that are obtained by means of the $(M-1)^{th}$ iterative operation, $\alpha$ is a diminution factor, $T$ is a transfer matrix, $R(n)_0$ includes an initial score of each user identifier and an initial score of each identifier of application software, n is a natural number and indicates that the transfer matrix includes n elements in the transfer matrix, a value of n is a sum of a quantity of user identifiers and a quantity of identifiers of application software that are included in the acquired user behavior data, m is a natural number and indicates a quantity of times of performing an iterative operation, and a value of m is determined by whether $R(n)_m$ obtained by means of calculation is convergent.

The following iterative data is obtained by using an experiment:

$$R^{10} = [0.1285, 0.0786, 0.0487, 0.0713, 0.0851, 0.0305, 0.0305];$$

$$R^{15} = [0.1311, 0.0837, 0.0526, 0.0735, 0.0884, 0.0327, 0.0327];$$

$$R^{25} = [0.1317, 0.0849, 0.0535, 0.0740, 0.0892, 0.0332, 0.0332];$$

$$R^{44} = [0.1318, 0.0850, 0.0535, 0.0741, 0.0892, 0.0332, 0.0332];$$

and

$$R^{45} = [0.1318, 0.0850, 0.0535, 0.0741, 0.0892, 0.0332, 0.0332].$$

In this case, it is found by comparing $R^{44}$ and $R^{45}$ that values basically remain unchanged. In this case, it is determined that $R^{45}$ is convergent. It is found by comparing values corresponding to U1 to U4 that U2 is greater than U1, U1 is greater than U3, and U3 is equal to U4, it is determined that U2 is a target user.

**Embodiment 3**

In Embodiment 3 of the present invention, data of a telecommunications operator is used as an example for further detailed description of the solutions in the embodiments of the present invention.

It should be noted that the telecommunications operator also has a requirement for determining a target user, for example, a user-oriented promotion of a mobile phone and recommendation of a tariff package. User behavior data that may be collected by the telecommunications operator includes: a call log, an SMS message log, a package type, and a tariff of a package. In addition, the operator further predicts a current location (base station positioning) of a user according to a data log of an air interface of a base station for making a phone call or performing data access (for example, surfing the Internet) by a user. That is, for service data of the telecommunications operator, a target user of a telecommunications service may also be determined by using the technical solutions proposed in the present invention.

First, correspondences between user identifiers, zone identifiers, and service package identifiers are established by using a manner of steps 101 to 102 in Embodiment 1 of the present invention.

It is assumed that the acquired user behavior data includes four user identifiers, that is, U1 to U4, three zone identifiers, that is, P1-P3, and three service package identifiers, that is, F1-F3. In this case, the correspondences that are established according to the user behavior data and between user identifiers, zone identifiers, and service package identifiers are:

correspondences of a first type, which are correspondences between user identifiers, including:

a correspondence between U1 and U3; and

a correspondence between U3 and U4;

correspondences of a second type, which are correspondences between user identifiers and service package identifiers, including:

a correspondence between U1, and P1 and P2;
a correspondence between U2, and P1 and P2;
a correspondence between U3, and P2 and P3; and
a correspondence between U4, and P2 and P3;

correspondences of a third type, which are correspondences between user identifiers and zone identifiers, including:

a correspondence between U1 and F1;
a correspondence between U2 and F1;
a correspondence between U3 and F2; and
a correspondence between U4 and F3.

Second, initial values are respectively determined, according to the established correspondences, for user identifiers, zone identifiers, and service package identifiers that are included in the correspondences, and a transfer matrix that includes user identifiers, zone identifiers, and service package identifiers is constructed.

Because multiple relationship types exist in the correspondences, different correspondence types are differentiated. For example, three types of correspondences are sequenced according to intensity of correspondence types: "user identifier-user identifier", "user identifier-service package identifier", and "user identifier-zone identifier". It is assumed that, in this embodiment, a ratio of transfer functions is 4:2:1. In this case, an obtained transfer matrix is (an order of elements in the transfer matrix is F1, F2, F3, U1, U2, U3, U4, P1, P2, P3):

$$T = \begin{pmatrix} 0 & 0 & 0 & 1/2 & 1/2 & 0 & 0 & 0 & 0 & 0 \\ 0 & 0 & 0 & 0 & 0 & 1 & 0 & 0 & 0 & 0 \\ 0 & 0 & 0 & 0 & 0 & 0 & 1 & 0 & 0 & 0 \\ 1/4 & 0 & 0 & 0 & 0 & 1/2 & 0 & 1/8 & 1/8 & 0 \\ 1/2 & 0 & 0 & 0 & 0 & 0 & 0 & 1/4 & 1/4 & 0 \\ 1/4 & 0 & 0 & 1/2 & 0 & 0 & 0 & 0 & 1/8 & 1/8 \\ 0 & 0 & 1/4 & 0 & 0 & 1/2 & 0 & 0 & 1/8 & 1/8 \\ 0 & 0 & 0 & 1/2 & 1/2 & 0 & 0 & 0 & 0 & 0 \\ 0 & 0 & 0 & 1/4 & 1/4 & 1/4 & 1/4 & 0 & 0 & 0 \\ 0 & 0 & 0 & 0 & 0 & 1/2 & 1/2 & 0 & 0 & 0 \end{pmatrix}$$

It should be noted that, the initial values respectively determined, according to the established correspondences, for the user identifiers, the zone identifiers, and the service package identifiers that are included in the I = [2/3,0,0,0,0,0,0,1/3,0,0] correspondences may be expressed as: , where an order of elements of the initial values is: F1, F2, F3, U1, U2, U3, U4, P1, P2, P3.

Finally, an iterative operation is performed, by using a value update rule and the initial values, on a value of a matrix element included in the transfer matrix to obtain, by means of calculation, a convergence value of each user identifier, and the convergence value is used as a value of a probability that a user corresponding to each user identifier becomes a target user.

Specifically, a convergence value in the transfer matrix element included in the transfer matrix is obtained by means of calculation:

$$R(n)_m = \alpha * T * R(n)_{m-1} + \frac{1-\alpha}{2} * \frac{1}{n} + \frac{1-\alpha}{2} * R(n)_0;$$

where

$R(n)_m$ indicates convergence values of n elements in the transfer matrix that are obtained by means of the $M^{th}$ iterative operation, $R(n)_{m-1}$ indicates convergence values of n elements in the transfer matrix that are obtained by means of the

(M-1)<sup>th</sup> iterative operation, $\alpha$ is a diminution factor, $T$ is a transfer matrix, $R(n)_0$ includes an initial score of each user identifier and an initial score of each behavior object identifier, n is a natural number and indicates that the transfer matrix includes n elements in the transfer matrix, a value of n is a sum of a quantity of user identifiers and a quantity of behavior object identifiers, where the user identifiers and the behavior object identifiers are included in the acquired user behavior data, m is a natural number and indicates a quantity of times of performing an iterative operation, and a value of m is determined by whether $R(n)_m$ obtained by means of calculation is convergent.

**Embodiment 4**

As shown in FIG. 4, FIG. 4 is a schematic structural diagram of a network server according to Embodiment 4 of the present invention. The network server has a function of executing Embodiment 1 of the present invention to Embodiment 3 of the present invention. The network server may use a structure of a general-purpose computer system; and the computer system may be specifically a processor-based computer. The network server entity includes a signal receiver 41 and at least one processor 42, and the signal receiver 41 is connected to the at least one processor 42 by using a communications bus 43.

The processor 42 may be a general-purpose central processing unit (CPU), a microprocessor, an application-specific integrated circuit (application-specific integrated circuit, ASIC), or one or more integrated circuits configured to control program execution of the solutions of the present invention.

The signal receiver 41 is configured to acquire, for any target service by using a communications network, user behavior data generated by multiple behavior objects that belong to a same service type as the target service, where each piece of user behavior data includes a user identifier and a behavior object identifier.

The processor 42 is configured to: determine, according to user identifiers and behavior object identifiers that are included in the acquired user behavior data, a correspondence between user identifiers of different users and behavior object identifiers of different behavior objects of the same type, where the correspondence is used to represent an operating and operated relationship between a user corresponding to a user identifier and a behavior object corresponding to a behavior object identifier; according to a behavior object included in the target service, assign an initial score to each user identifier in the correspondence, and assign an initial score to each behavior object identifier in the correspondence; use the correspondence to construct a data model that is used for score transferring, where elements of the constructed data model include a user identifier and a behavior object identifier that are in the correspondence; and calculate, based on the data model and the initial scores and by using a value update rule, a value of an element included in the data model to obtain a value of a probability that a user corresponding to each user identifier becomes a target user corresponding to the target service, and select, according to the value of the probability, a target user of the target service.

Specifically, the data model is a transfer matrix, and elements included in the transfer matrix include the user identifier and the behavior object identifier that are in the correspondence.

The processor 42 is specifically configured to: perform, according to the initial scores and the value update rule, an iterative operation on a value of a matrix element included in the transfer matrix to obtain, by means of calculation, a convergence value of each user identifier; and use the convergence value as the value of the probability that the user corresponding to each user identifier becomes the target user corresponding to the target service.

Specifically, the processor 42 is specifically configured to: obtain, by means of calculation, a convergence value in the transfer matrix element included in the transfer matrix; and determine a matrix element corresponding to each user identifier, and use a convergence value corresponding to a determined matrix element as a convergence value of a user identifier corresponding to the matrix element, where the convergence value is obtained by means of calculation; where

the convergence value in the transfer matrix element included in the transfer matrix is obtained by means of calculation in the following manner:

$$R(n)_m = \alpha * T * R(n)_{m-1} + \frac{1-\alpha}{2} * \frac{1}{n} + \frac{1-\alpha}{2} * R(n)_0 ;$$

where
$R(n)_m$ indicates convergence values of n elements in the transfer matrix that are obtained by means of the M<sup>th</sup> iterative operation, $R(n)_{m-1}$ indicates convergence values of n elements in the transfer matrix that are obtained by means of the (M-1)<sup>th</sup> iterative operation, $\alpha$ is a diminution factor, $T$ is a transfer matrix, $R(n)_0$ includes an initial score of each user identifier and an initial score of each behavior object identifier, n is a natural number and indicates that the transfer matrix includes n elements in the transfer matrix, a value of n is a sum of a quantity of user identifiers and a quantity of behavior object identifiers, where the user identifiers and the behavior object identifiers are included in the acquired user behavior data, m is a natural number and indicates a quantity of times of performing an iterative operation, and a value of m is determined by whether $R(n)_m$ obtained by means of calculation is convergent.

Specifically, a manner of determining an initial value in the transfer matrix element included in the transfer matrix includes:

for the user identifiers included in the acquired user behavior data, determining, according to the correspondence, a quantity of behavior object identifiers that have a correspondence with one user identifier, and obtaining, according to the quantity of the behavior object identifiers, an initial value of a matrix element, where the matrix element is in the transfer matrix and determined by the user identifier, and the behavior object identifiers that have a correspondence; and

for the behavior object identifiers included in the acquired user behavior data, determining, according to the correspondence, a quantity of user identifiers that have a correspondence with one behavior object identifier, and obtaining, according to the quantity of the user identifiers, an initial value of a matrix element, where the matrix element is in the transfer matrix and determined by the behavior object identifier, and the user identifiers that have a correspondence.

Specifically, the processor 42 is specifically configured to: select, from the acquired user behavior data according to the behavior object included in the target service, behavior object identifiers that are the same as or similar to the behavior object included in the target service; determine that, in the correspondence, an initial score of an already-selected behavior object identifier is greater than an initial score of an unselected behavior object identifier; and determine that, in the correspondence, an initial score of a user identifier that has a correspondence with the already-selected behavior object identifier is greater than an initial score of a user identifier that has a correspondence with the unselected behavior object identifier, where in the correspondence, an initial score of a behavior object identifier the same as the behavior object identifier included in the target service is greater than an initial score of a behavior object identifier similar to the behavior object identifier included in the target service.

Optionally, the processor 42 is further configured to: after the correspondence between user identifiers of different users and behavior object identifiers of different behavior objects of the same type is determined, establish, according to the correspondence, an association diagram between a user identifier and a behavior object identifier, where the association diagram includes at least one or more of the following: a user identifier node, a behavior object identifier node, an association line between different user identifier nodes that have an association relationship, an association line between a user identifier and a behavior object identifier that have an association relationship, and an association line between different behavior object identifier nodes that have an association relationship.

Optionally, a manner of determining an initial value in the transfer matrix element included in the transfer matrix includes:

determining, according to an association line between each user identifier and another user identifier and an association line between each user identifier and a behavior object identifier in the association diagram, an initial value of a matrix element, where the matrix element is in the transfer matrix and determined by the user identifier and a behavior object identifier or another user identifier that has an association relationship; and

determining, according to an association line between each behavior object identifier and a user identifier in the association diagram, an initial value of a matrix element, where the matrix element is in the transfer matrix and determined by the behavior object identifier and a user identifier that has an association relationship.

Specifically, the processor 42 is specifically configured to: determine social behavior data of users that are corresponding to the user identifiers included in the acquired user behavior data; establish, according to the user identifiers included in the acquired user behavior data and the determined social behavior data of the users, a direct association relationship or an indirect association relationship between user identifiers of different users; and use the behavior object identifiers included in the acquired user behavior data and the direct association relationship or the indirect association relationship between user identifiers of different users to determine the correspondence between user identifiers of different users and behavior object identifiers of different behavior objects of the same type.

**Embodiment 5**

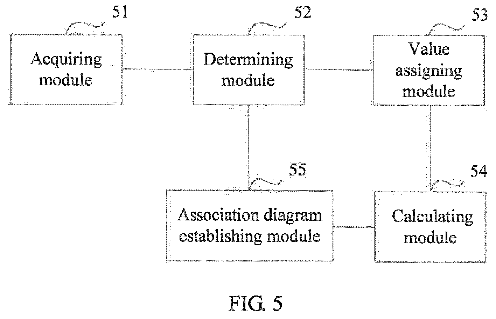

As shown in FIG. 5, FIG. 5 is a schematic structural diagram of a device for determining a target user according to Embodiment 5 of the present invention. The device for determining includes: an acquiring module 51, a determining module 52, a value assigning module 53, and a calculating module 54.

The acquiring module 51 is configured to acquire, for any target service, user behavior data generated by multiple behavior objects that belong to a same service type as the target service, where each piece of user behavior data includes a user identifier and a behavior object identifier.

The determining module 52 is configured to determine, according to user identifiers and behavior object identifiers that are included in the user behavior data acquired by the acquiring module, a correspondence between user identifiers of different users and behavior object identifiers of different behavior objects of the same type, where the correspondence is used to represent an operating and operated relationship between a user corresponding to a user identifier and a behavior object corresponding to a behavior object identifier.

The value assigning module 53 is configured to: according to a behavior object included in the target service, assign an initial score to each user identifier in the correspondence, and assign an initial score to each behavior object identifier in the correspondence.

The calculating module 54 is configured to use the correspondence determined by the determining module to construct a data model that is used for score transferring, where elements of the constructed data model include a user identifier and a behavior object identifier that are in the correspondence.

A value of an element included in the data model is calculated based on the data model and the initial scores of the value assigning module and by using a value update rule to obtain a value of a probability that a user corresponding to each user identifier becomes a target user corresponding to the target service, and a target user of the target service is selected according to the value of the probability.

Specifically, the data model is a transfer matrix, and elements included in the transfer matrix include the user identifier and the behavior object identifier that are in the correspondence.

The calculating module 54 is specifically configured to: perform, according to the initial scores and the value update rule, an iterative operation on a value of a matrix element included in the transfer matrix to obtain, by means of calculation, a convergence value of each user identifier; and use the convergence value as the value of the probability that the user corresponding to each user identifier becomes the target user corresponding to the target service.

Specifically, the calculating module 54 is specifically configured to: obtain, by means of calculation, a convergence value in the transfer matrix element included in the transfer matrix; and determine a matrix element corresponding to each user identifier, and use a convergence value corresponding to a determined matrix element as a convergence value of a user identifier corresponding to the matrix element, where the convergence value is obtained by means of calculation; where

the convergence value in the transfer matrix element included in the transfer matrix is obtained by means of calculation in the following manner:

$$R(n)_m = \alpha * T * R(n)_{m-1} + \frac{1-\alpha}{2} * \frac{1}{n} + \frac{1-\alpha}{2} * R(n)_0 \; ;$$

where

$R(n)_m$ indicates convergence values of n elements in the transfer matrix that are obtained by means of the M$^{th}$ iterative operation, $\alpha$ indicates convergence values of n elements in the transfer matrix that are obtained by means of the (M-1)$^{th}$ iterative operation, $T$ is a diminution factor, $R(n)_0$ is a transfer matrix, $R(n)_m$ includes an initial score of each user identifier and an initial score of each behavior object identifier, n is a natural number and indicates that the transfer matrix includes n elements, a value of n is a sum of a quantity of user identifiers and a quantity of behavior object identifiers, where the user identifiers and the behavior object identifiers are included in the acquired user behavior data, m is a natural number and indicates a quantity of times of performing an iterative operation, and a value of m is determined by whether $R(n)_{m-1}$ obtained by means of calculation is convergent.

Specifically, a manner of determining an initial value in the transfer matrix element included in the transfer matrix includes:

for the user identifiers included in the acquired user behavior data, determining, according to the correspondence, a quantity of behavior object identifiers that have a correspondence with one user identifier, and obtaining, according to the quantity of the behavior object identifiers, an initial value of a matrix element, where the matrix element is in the transfer matrix and determined by the user identifier, and the behavior object identifiers that have a correspondence; and

for the behavior object identifiers included in the acquired user behavior data, determining, according to the correspondence, a quantity of user identifiers that have a correspondence with one behavior object identifier, and obtaining, according to the quantity of the user identifiers, an initial value of a matrix element, where the matrix element is in the transfer matrix and determined by the behavior object identifier, and the user identifiers that have a correspondence.

Specifically, the value assigning module 53 is specifically configured to: select, from the acquired user behavior data according to the behavior object included in the target service, behavior object identifiers that are the same as or similar to the behavior object included in the target service; determine that, in the correspondence, an initial score of an already-selected behavior object identifier is greater than an initial score of an unselected behavior object identifier; and determine that, in the correspondence, an initial score of a user identifier that has a correspondence with the already-selected behavior object identifier is greater than an initial score of a user identifier that has a correspondence with the unselected behavior object identifier, where in the correspondence, an initial score of a behavior object identifier the same as the behavior object identifier included in the target service is greater than an initial score of a behavior object identifier similar to the behavior object identifier included in the target service.

Optionally, the device for determining further includes an association diagram establishing module 55.

The association diagram establishing module 55 is configured to: after the correspondence between user identifiers of different users and behavior object identifiers of different behavior objects of the same type is determined, establish, according to the correspondence determined by the determining module, an association diagram between a user identifier and a behavior object identifier, where the association diagram includes at least one or more of the following: a user identifier node, a behavior object identifier node, an association line between different user identifier nodes that have an association relationship, an association line between a user identifier and a behavior object identifier that have an association relationship, and an association line between different behavior object identifier nodes that have an association relationship.

Optionally, a manner of determining an initial value in the transfer matrix element included in the transfer matrix includes:

determining, according to an association line between each user identifier and another user identifier and an association line between each user identifier and a behavior object identifier in the association diagram, an initial value of a matrix element, where the matrix element is in the transfer matrix and determined by the user identifier and a behavior object identifier or another user identifier that has an association relationship; and

determining, according to an association line between each behavior object identifier and a user identifier in the association diagram, an initial value of a matrix element, where the matrix element is in the transfer matrix and determined by the behavior object identifier and a user identifier that has an association relationship.

Specifically, the determining module 52 is specifically configured to: determine social behavior data of users that are corresponding to the user identifiers included in the acquired user behavior data; establish, according to the user identifiers included in the acquired user behavior data and the determined social behavior data of the users, a direct association relationship or an indirect association relationship between user identifiers of different users; and use the behavior object identifiers included in the acquired user behavior data and the direct association relationship or the indirect association relationship between user identifiers of different users to determine the correspondence between user identifiers of different users and behavior object identifiers of different behavior objects of the same type.

A person skilled in the art should understand that the embodiments of the present invention may be provided as a method, an apparatus (device), or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the apparatus (device), and the computer program product according to the embodiments of the present invention. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more procedures in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or

EP 3 001 332 A1

the another programmable device provide steps for implementing a specific function in one or more procedures in the flowcharts and/or in one or more blocks in the block diagrams.

Although some preferred embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

Obviously, a person skilled in the art can make various modifications and variations to the present invention without departing from the spirit and scope of the present invention. The present invention is intended to cover these modifications and variations provided that they fall within the scope of protection defined by the following claims and their equivalent technologies.

**Claims**

1. A method for determining a target user, comprising:

for any target service, acquiring user behavior data generated by multiple behavior objects that belong to a same service type as the target service, wherein each piece of the user behavior data comprises a user identifier and a behavior object identifier;

determining, according to the user identifiers and behavior object identifiers that are comprised in the acquired user behavior data, a correspondence between user identifiers of different users and behavior object identifiers of different behavior objects of the same type, wherein the correspondence is used to represent an operating and operated relationship between a user corresponding to a user identifier and a behavior object corresponding to a behavior object identifier;

according to a behavior object comprised in the target service, assigning an initial score to each user identifier in the correspondence, and assigning an initial score to each behavior object identifier in the correspondence;

using the correspondence to construct a data model that is used for score transferring, wherein elements of the constructed data model comprise the user identifier and the behavior object identifier that are in the correspondence; and

calculating, based on the data model and the initial scores and by using a value update rule, a value of an element comprised in the data model to obtain a value of a probability that a user corresponding to each user identifier becomes a target user corresponding to the target service, and selecting, according to the value of the probability, a target user of the target service.

2. The method according to claim 1, wherein the data model is a transfer matrix, and elements comprised in the transfer matrix comprise the user identifier and the behavior object identifier that are in the correspondence; and

the caculating, based on the data model and the initial scores and by using a value update rule, an iterative operation on a value of an element comprised in the data model to obtain, by means of calculation, a value of a probability that a user corresponding to each user identifier becomes a target user corresponding to the target service comprises:

performing, according to the initial scores and the value update rule, an iterative operation on a value of a matrix element comprised in the transfer matrix to obtain, by means of calculation, a convergence value of each user identifier, and using the convergence value as the value of the probability that the user corresponding to each user identifier becomes the target user corresponding to the target service.

3. The method according to claim 2, wherein the performing, according to the initial scores and the value update rule, an iterative operation on a value of a matrix element comprised in the transfer matrix to obtain, by means of calculation, a convergence value of each user identifier, and using the convergence value as the value of the probability that the user corresponding to each user identifier becomes the target user corresponding to the target service comprises:

obtaining, by means of calculation, a convergence value in the transfer matrix element comprised in the transfer matrix; and

determining a matrix element corresponding to each user identifier, and using a convergence value corresponding to a determined matrix element as a convergence value of a user identifier corresponding to the matrix element, wherein the convergence value is obtained by means of calculation; wherein

the convergence value in the transfer matrix element comprised in the transfer matrix is obtained by means of calculation in the following manner:

$$R(n)_m = \alpha * T * R(n)_{m-1} + \frac{1-\alpha}{2} * \frac{1}{n} + \frac{1-\alpha}{2} * R(n)_0 \; ;$$

wherein

$R(n)_m$ indicates convergence values of n elements in the transfer matrix that are obtained by means of the Mth iterative operation, $R(n)_{m-1}$ indicates convergence values of n elements in the transfer matrix that are obtained by means of the (M-1)th iterative operation, $\alpha$ is a diminution factor, $T$ is a transfer matrix, $R(n)_0$ comprises an initial score of each user identifier and an initial score of each behavior object identifier, n is a natural number and indicates that the transfer matrix comprises n elements, a value of n is a sum of a quantity of user identifiers and a quantity of behavior object identifiers, wherein the user identifiers and the behavior object identifiers are comprised in the acquired user behavior data, m is a natural number and indicates a quantity of times of performing an iterative operation, and a value of m is determined by whether $R(n)_m$ obtained by means of calculation is convergent.

4. The method according to claim 2 or 3, wherein a manner of determining the initial value in the transfer matrix element comprised in the transfer matrix comprises:

for the user identifiers comprised in the acquired user behavior data, determining, according to the correspondence, a quantity of behavior object identifiers that have a correspondence with the user identifiers, and obtaining, according to the quantity of the behavior object identifiers, an initial value of a element in the transfer matrix, wherein the element in the transfer matrix is determined according to the user identifier, and the behavior object identifiers that have a correspondence; and

for the behavior object identifiers comprised in the acquired user behavior data, determining, according to the correspondence, a quantity of user identifiers that have a correspondence with one behavior object identifier, and obtaining, according to the quantity of the user identifiers, an initial value of a matrix element, wherein the matrix element is in the transfer matrix and determined by the behavior object identifier, and the user identifiers that have a correspondence.

5. The method according to any one of claims 1 to 4, wherein the according to an object identifier comprised in the target service, assigning an initial score to each user identifier in the correspondence, and assigning an initial score to each behavior object identifier in the correspondence comprises:

selecting, from the acquired user behavior data according to the behavior object comprised in the target service, behavior object identifiers that are the same as or similar to the behavior object comprised in the target service; determining that, in the correspondence, an initial score of an already-selected behavior object identifier is greater than an initial score of an unselected behavior object identifier; and determining that, in the correspondence, an initial score of a user identifier that has a correspondence with the already-selected behavior object identifier is greater than an initial score of a user identifier that has a correspondence with the unselected behavior object identifier, wherein in the correspondence, an initial score of a behavior object identifier the same as the behavior object identifier comprised in the target service is greater than an initial score of a behavior object identifier similar to the behavior object identifier comprised in the target service.

6. The method according to claim 1, wherein after the determining a correspondence between user identifiers of different users and behavior object identifiers of different behavior objects of the same type, the method further comprises:

establishing, according to the correspondence, an association diagram between a user identifier and a behavior object identifier, wherein the association diagram comprises at least one or more of the following: a user identifier node, a behavior object identifier node, an association line between different user identifier nodes that have an association relationship, an association line between a user identifier and a behavior object identifier that have an association relationship, and an association line between different behavior object identifier nodes that have an association relationship.

7. The method according to claim 6, wherein a manner of determining an initial value in the transfer matrix element comprised in the transfer matrix comprises:

determining, according to an association line between each user identifier and another user identifier and an association line between each user identifier and a behavior object identifier in the association diagram, an initial value of a matrix element, wherein the matrix element is in the transfer matrix and determined by the user identifier and a behavior object identifier or another user identifier that has an association relationship; and determining, according to an association line between each behavior object identifier and a user identifier in the association diagram, an initial value of a matrix element, wherein the matrix element is in the transfer matrix and determined by the behavior object identifier and a user identifier that has an association relationship.

8.  The method according to any one of claims 1 to 7, wherein the determining, according to user identifiers and behavior object identifiers that are comprised in the user behavior data, a correspondence between user identifiers of different users and behavior object identifiers of different behavior objects of the same type comprises:

     determining social behavior data of users that are corresponding to the user identifiers comprised in the acquired user behavior data;
     establishing, according to the user identifiers comprised in the acquired user behavior data and the determined social behavior data of the users, a direct association relationship or an indirect association relationship between user identifiers of different users; and
     using the behavior object identifiers comprised in the acquired user behavior data and the direct association relationship or the indirect association relationship between user identifiers of different users to determine the correspondence between user identifiers of different users and behavior object identifiers of different behavior objects of the same type.

9.  A network server, comprising:

     a signal receiver, configured to acquire, for any target service by using a communications network, user behavior data generated by multiple behavior objects that belong to a same service type as the target service, wherein each piece of user behavior data comprises a user identifier and a behavior object identifier; and
     a processor, configured to: determine, according to user identifiers and behavior object identifiers that are comprised in the acquired user behavior data, a correspondence between user identifiers of different users and behavior object identifiers of different behavior objects of the same type, wherein the correspondence is used to represent an operating and operated relationship between a user corresponding to a user identifier and a behavior object corresponding to a behavior object identifier; according to a behavior object comprised in the target service, assign an initial score to each user identifier in the correspondence, and assign an initial score to each behavior object identifier in the correspondence; use the correspondence to construct a data model that is used for score transferring, wherein elements of the constructed data model comprise a user identifier and a behavior object identifier that are in the correspondence; and calculate, based on the data model and the initial scores and by using a value update rule, a value of an element comprised in the data model to obtain a value of a probability that a user corresponding to each user identifier becomes a target user corresponding to the target service, and select, according to the value of the probability, a target user of the target service.

10. The network server according to claim 9, wherein the data model is a transfer matrix, and elements comprised in the transfer matrix comprise the user identifier and the behavior object identifier that are in the correspondence; and the processor is specifically configured to: perform, according to the initial scores and the value update rule, an iterative operation on a value of a matrix element comprised in the transfer matrix to obtain, by means of calculation, a convergence value of each user identifier; and use the convergence value as the value of the probability that the user corresponding to each user identifier becomes the target user corresponding to the target service.

11. The network server according to claim 10, wherein:

     the processor is specifically configured to: obtain, by means of calculation, a convergence value in the transfer matrix element comprised in the transfer matrix; and determine a matrix element corresponding to each user identifier, and use a convergence value corresponding to a determined matrix element as a convergence value of a user identifier corresponding to the matrix element, wherein the convergence value is obtained by means of calculation; wherein
     the convergence value in the transfer matrix element comprised in the transfer matrix is obtained by means of calculation in the following manner:

$$R(n)_m = \alpha * T * R(n)_{m-1} + \frac{1-\alpha}{2} * \frac{1}{n} + \frac{1-\alpha}{2} * R(n)_0 \;;$$

wherein

$R(n)_m$ indicates convergence values of n elements in the transfer matrix that are obtained by means of the $M^{th}$ iterative operation, $R(n)_{m-1}$ indicates convergence values of n elements in the transfer matrix that are obtained by means of the $(M-1)^{th}$ iterative operation, $\alpha$ is a diminution factor, $T$ is a transfer matrix, $R(n)_0$ comprises an initial score of each user identifier and an initial score of each behavior object identifier, n is a natural number and indicates that the transfer matrix comprises n elements in the transfer matrix, a value of n is a sum of a quantity of user identifiers and a quantity of behavior object identifiers, wherein the user identifiers and the behavior object identifiers are comprised in the acquired user behavior data, m is a natural number and indicates a quantity of times of performing an iterative operation, and a value of m is determined by whether $R(n)_m$ obtained by means of calculation is convergent.

12. The network server according to claim 10 or 11, wherein a manner of determining an initial value in the transfer matrix element comprised in the transfer matrix comprises:

for the user identifiers comprised in the acquired user behavior data, determining, according to the correspondence, a quantity of behavior object identifiers that have a correspondence with one user identifier, and obtaining, according to the quantity of the behavior object identifiers, an initial value of a matrix element, wherein the matrix element is in the transfer matrix and determined by the user identifier, and the behavior object identifiers that have a correspondence; and

for the behavior object identifiers comprised in the acquired user behavior data, determining, according to the correspondence, a quantity of user identifiers that have a correspondence with one behavior object identifier, and obtaining, according to the quantity of the user identifiers, an initial value of a matrix element, wherein the matrix element is in the transfer matrix and determined by the behavior object identifier, and the user identifiers that have a correspondence.

13. The network server according to any one of claims 9 to 12, wherein:

the processor is specifically configured to: select, from the acquired user behavior data according to the behavior object comprised in the target service, behavior object identifiers that are the same as or similar to the behavior object comprised in the target service; determine that, in the correspondence, an initial score of an already-selected behavior object identifier is greater than an initial score of an unselected behavior object identifier; and determine that, in the correspondence, an initial score of a user identifier that has a correspondence with the already-selected behavior object identifier is greater than an initial score of a user identifier that has a correspondence with the unselected behavior object identifier, wherein in the correspondence, an initial score of a behavior object identifier the same as the behavior object identifier comprised in the target service is greater than an initial score of a behavior object identifier similar to the behavior object identifier comprised in the target service.

14. The network server according to claim 9, wherein:

the processor is further configured to: after the correspondence between user identifiers of different users and behavior object identifiers of different behavior objects of the same type is determined, establish, according to the correspondence, an association diagram between a user identifier and a behavior object identifier, wherein the association diagram comprises at least one or more of the following: a user identifier node, a behavior object identifier node, an association line between different user identifier nodes that have an association relationship, an association line between a user identifier and a behavior object identifier that have an association relationship, and an association line between different behavior object identifier nodes that have an association relationship.

15. The network server according to claim 14, wherein a manner of determining an initial value in the transfer matrix element comprised in the transfer matrix comprises:

determining, according to an association line between each user identifier and another user identifier and an association line between each user identifier and a behavior object identifier in the association diagram, an initial value of a matrix element, wherein the matrix element is in the transfer matrix and determined by the user identifier and a behavior object identifier or another user identifier that has an association relationship; and determining, according to an association line between each behavior object identifier and a user identifier in the association diagram, an initial value of a matrix element, wherein the matrix element is in the transfer matrix and determined by the behavior object identifier and a user identifier that has an association relationship.

16. The network server according to any one of claims 9 to 15, wherein:

the processor is specifically configured to: determine social behavior data of users that are corresponding to the user identifiers comprised in the acquired user behavior data; establish, according to the user identifiers comprised in the acquired user behavior data and the determined social behavior data of the users, a direct association relationship or an indirect association relationship between user identifiers of different users; and use the behavior object identifiers comprised in the acquired user behavior data and the direct association relationship or the indirect association relationship between user identifiers of different users to determine the correspondence between user identifiers of different users and behavior object identifiers of different behavior objects of the same type.

17. A device for determining a target user, comprising:

an acquiring module, configured to acquire, for any target service, user behavior data generated by multiple behavior objects that belong to a same service type as the target service, wherein each piece of user behavior data comprises a user identifier and a behavior object identifier;
a determining module, configured to determine, according to user identifiers and behavior object identifiers that are comprised in the user behavior data acquired by the acquiring module, a correspondence between user identifiers of different users and behavior object identifiers of different behavior objects of the same type, wherein the correspondence is used to represent an operating and operated relationship between a user corresponding to a user identifier and a behavior object corresponding to a behavior object identifier;
a value assigning module, configured to: according to a behavior object comprised in the target service, assign an initial score to each user identifier in the correspondence, and assign an initial score to each behavior object identifier in the correspondence; and
a calculating module, configured to: use the correspondence determined by the determining module to construct a data model that is used for score transferring, wherein elements of the constructed data model comprise a user identifier and a behavior object identifier that are in the correspondence; and
calculate, based on the data model and the initial scores of the value assigning module and by using a value update rule, a value of an element comprised in the data model to obtain a value of a probability that a user corresponding to each user identifier becomes a target user corresponding to the target service, and select, according to the value of the probability, a target user of the target service.

18. The device for determining according to claim 17, wherein the data model is a transfer matrix, and elements comprised in the transfer matrix comprise the user identifier and the behavior object identifier that are in the correspondence; and the calculating module is specifically configured to: perform, according to the initial scores and the value update rule, an iterative operation on a value of a matrix element comprised in the transfer matrix to obtain, by means of calculation, a convergence value of each user identifier; and use the convergence value as the value of the probability that the user corresponding to each user identifier becomes the target user corresponding to the target service.

19. The device for determining according to claim 18, wherein:

the calculating module is specifically configured to: obtain, by means of calculation, a convergence value in the transfer matrix element comprised in the transfer matrix; and determine a matrix element corresponding to each user identifier, and use a convergence value corresponding to a determined matrix element as a convergence value of a user identifier corresponding to the matrix element, wherein the convergence value is obtained by means of calculation; wherein
the convergence value in the transfer matrix element comprised in the transfer matrix is obtained by means of calculation in the following manner:

$$R(n)_m = \alpha * T * R(n)_{m-1} + \frac{1-\alpha}{2} * \frac{1}{n} + \frac{1-\alpha}{2} * R(n)_0 ;$$

wherein

$R(n)_m$ indicates convergence values of n elements in the transfer matrix that are obtained by means of the $M^{th}$ iterative operation, $R(n)_{m-1}$ indicates convergence values of n elements in the transfer matrix that are obtained by means of the $(M-1)^{th}$ iterative operation, $\alpha$ is a diminution factor, $T$ is a transfer matrix, $R(n)_0$ comprises an initial score of each user identifier and an initial score of each behavior object identifier, n is a natural number and indicates that the transfer matrix comprises n elements, a value of n is a sum of a quantity of user identifiers and a quantity of behavior object identifiers, wherein the user identifiers and the behavior object identifiers are comprised in the acquired user behavior data, m is a natural number and indicates a quantity of times of performing an iterative operation, and a value of m is determined by whether $R(n)_m$ obtained by means of calculation is convergent.

**20.** The device for determining according to claim 18 or 19, wherein a manner of determining an initial value in the transfer matrix element comprised in the transfer matrix comprises:

for the user identifiers comprised in the acquired user behavior data, determining, according to the correspondence, a quantity of behavior object identifiers that have a correspondence with one user identifier, and obtaining, according to the quantity of the behavior object identifiers, an initial value of a matrix element, wherein the matrix element is in the transfer matrix and determined by the user identifier, and the behavior object identifiers that have a correspondence; and

for the behavior object identifiers comprised in the acquired user behavior data, determining, according to the correspondence, a quantity of user identifiers that have a correspondence with one behavior object identifier, and obtaining, according to the quantity of the user identifiers, an initial value of a matrix element, wherein the matrix element is in the transfer matrix and determined by the behavior object identifier, and the user identifiers that have a correspondence.

**21.** The device for determining according to any one of claims 17 to 20, wherein:

the value assigning module is specifically configured to: select, from the acquired user behavior data according to the behavior object comprised in the target service, behavior object identifiers that are the same as or similar to the behavior object comprised in the target service; determine that, in the correspondence, an initial score of an already-selected behavior object identifier is greater than an initial score of an unselected behavior object identifier; and determine that, in the correspondence, an initial score of a user identifier that has a correspondence with the already-selected behavior object identifier is greater than an initial score of a user identifier that has a correspondence with the unselected behavior object identifier, wherein in the correspondence, an initial score of a behavior object identifier the same as the behavior object identifier comprised in the target service is greater than an initial score of a behavior object identifier similar to the behavior object identifier comprised in the target service.

**22.** The device for determining according to claim 17, wherein the device for determining further comprises:

an association diagram establishing module, configured to: after the correspondence between user identifiers of different users and behavior object identifiers of different behavior objects of the same type is determined, establish, according to the correspondence determined by the determining module, an association diagram between a user identifier and a behavior object identifier, wherein the association diagram comprises at least one or more of the following: a user identifier node, a behavior object identifier node, an association line between different user identifier nodes that have an association relationship, an association line between a user identifier and a behavior object identifier that have an association relationship, and an association line between different behavior object identifier nodes that have an association relationship.

**23.** The device for determining according to claim 22, wherein a manner of determining an initial value in the transfer matrix element comprised in the transfer matrix comprises:

determining, according to an association line between each user identifier and another user identifier and an association line between each user identifier and a behavior object identifier in the association diagram, an initial value of a matrix element, wherein the matrix element is in the transfer matrix and determined by the user identifier and a behavior object identifier or another user identifier that has an association relationship; and determining, according to an association line between each behavior object identifier and a user identifier in the association diagram, an initial value of a matrix element, wherein the matrix element is in the transfer matrix and determined by the behavior object identifier and a user identifier that has an association relationship.

24. The device for determining according to any one of claims 17 to 23, wherein:

the determining module is specifically configured to: determine social behavior data of users that are corresponding to the user identifiers comprised in the acquired user behavior data; establish, according to the user identifiers comprised in the acquired user behavior data and the determined social behavior data of the users, a direct association relationship or an indirect association relationship between user identifiers of different users; and use the behavior object identifiers comprised in the acquired user behavior data and the direct association relationship or the indirect association relationship between user identifiers of different users to determine the correspondence between user identifiers of different users and behavior object identifiers of different behavior objects of the same type.

101

For any target service, acquire user behavior data generated by multiple behavior objects that belong to a same service type as the target service

102

Determine, according to user identifiers and behavior object identifiers that are included in the acquired user behavior data, a correspondence between user identifiers of different users and behavior object identifiers of different behavior objects of the same type

103

According to a behavior object included in the target service, assign an initial score to each user identifier in the correspondence, and assign an initial score to each behavior object identifier in the correspondence

104

Use the correspondence to construct a data model that is used for score transferring

105

Calculate, based on the data model and the initial scores and by using a value update rule, a value of an element included in the data model to obtain a value of a probability that a user corresponding to each user identifier becomes a target user corresponding to the target service, and select, according to the value of the probability, a target user of the target service

FIG. 1

FIG. 2

301

For a piece of application software that is suitable for use by a student, acquire user behavior data of a type of the application software, and establish a correspondence between user identifiers of different users and identifiers of application software according to user identifiers and identifiers of application software downloaded by users corresponding to the user identifiers, where the user identifiers and the identifiers of the application software are included in the user behavior data

302

Select, from the acquired user behavior data, an identifier of application software the same as or similar to the application software that is suitable for use by the student; and according to the selected identifier of the application software, assign an initial score to each user identifier in the correspondence, and assign an initial score to an identifier of each application software

303

Use the correspondence to construct a transfer matrix that is used for score transferring

304

Perform, by using a value update rule and the initial values, an iterative operation on a value of a matrix element included in the transfer matrix to obtain, by means of calculation, a convergence value of each user identifier; and use the convergence value as a value of a probability that a user corresponding to each user identifier becomes a target user

FIG. 3

41

42

Signal receiver

Processor

43

FIG. 4

FIG. 5

# INTERNATIONAL SEARCH REPORT

International application No.

**PCT/CN2014/095612**

## A. CLASSIFICATION OF SUBJECT MATTER

G06F 17/30 (2006.01) i

According to International Patent Classification (IPC) or to both national classification and IPC

## B. FIELDS SEARCHED

Minimum documentation searched (classification system followed by classification symbols)

G06F; H04W; H04Q; H04L

Documentation searched other than minimum documentation to the extent that such documents are included in the fields searched

Electronic data base consulted during the international search (name of data base and, where practicable, search terms used)

WPI, EPDOC, CNKI, CNPAT: network, user, behavior analysis, correspondence, user identity, object identity, data model, update rule, probability value, target user, network user, behavior, action, analyse, analyze, match, relation, object, identify, renew

## C. DOCUMENTS CONSIDERED TO BE RELEVANT

| Category* | Citation of document, with indication, where appropriate, of the relevant passages | Relevant to claim No. |
|---|---|---|
| A | CN 102609471 A (KANG, Rui), 25 July 2012 (25.07.2012), the whole document | 1-24 |
| A | CN 102946319 A (FOCUS TECHNOLOGY CO., LTD. et al.), 27 February 2013 (27.02.2013), the whole document | 1-24 |
| A | CN 103838806 A (HARBIN ENGINEERING UNIVERSITY), 04 June 2014 (04.06.2014), the whole document | 1-24 |
| A | CN 103886105 A (BEIJING UNIVERSITY OF TECHNOLOGY), 25 June 2014 (25.06.2014), the whole document | 1-24 |
| A | US 2010169474 A1 (AT&T INTELLECTUAL PROPERTY I, L.P.), 01 July 2010 (01.07.2010), the whole document | 1-24 |

☐ Further documents are listed in the continuation of Box C.   ☒ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 20 April 2015 (20.04.2015) | **06 May 2015 (06.05.2015)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **WANG, Gang** Telephone No.: (86-10) **62413201** |
|---|---|

Form PCT/ISA/210 (second sheet) (July 2009)

## INTERNATIONAL SEARCH REPORT
### Information on patent family members

| International application No. |
| --- |
| **PCT/CN2014/095612** |

| Patent Documents referred in the Report | Publication Date | Patent Family | Publication Date |
| --- | --- | --- | --- |
| CN 102609471 A | 25 July 2012 | None | |
| CN 102946319 A | 27 February 2013 | None | |
| CN 103838806 A | 04 June 2014 | None | |
| CN 103886105 A | 25 June 2014 | None | |
| US 2010169474 A1 | 01 July 2010 | US 2012324585 A1 | 20 December 2012 |

Form PCT/ISA/210 (patent family annex) (July 2009)